# EUROPEAN PATENT APPLICATION

(11) **EP 2 012 408 A1**
(43) Date of publication of application: **07.01.2009**
(21) Application number: 07739480.7
(22) Date of filing: 23.03.2007
(51) Int. Cl.: H02K 1/02, F04B 39/00, H02K 1/14, H02K 1/18, H02K 15/02, H02K 21/24

(54) **ARMATURE CORE, MOTOR USING IT, AND ITS MANUFACTURING METHOD**

(30) Priority: 27.03.2006 JP 2006084511; 28.12.2006 JP 2006354082; 06.02.2007 JP 2007026642
(60) Divisional application: 08020015.7
(71) Applicant: DAIKIN INDUSTRIES, LTD., Osaka-shi, Osaka 530-8323 (JP)
(72) Inventor: ASANO, Yoshinari, Kusatsu-shi, Shiga 525-8526 (JP); NAKAMASU, Shin, Kusatsu-shi, Shiga 525-8526 (JP); KONDOU, Toshinari, Kusatsu-shi, Shiga 525-8526 (JP)
(74) Representative: HOFFMANN EITLE
(86) International application number: PCT/JP2007/056039
(87) International publication number: WO 2007/114079

(57) **Abstract**

An object is to enable simple manufacture of a motor, especially, a stator core or a field without impairment of motor characteristics. The motor includes a shaft (20), a rotor (31) fixed to the shaft (20), and a stator (21) including a stator core (24) that faces the rotor (31) with a certain space therebetween and coils (23) that are attached to the stator core (24). The stator (21) includes a back yoke (24a), and the stator core (24) having a plurality of teeth (24b) that are circumferentially placed in an axial end face of the back yoke (24a) so as to stand upright axially of the back yoke (24a), and that are formed of a dust core made of pressed magnetic powder. The above-mentioned teeth (24b) are buried axially to a certain depth in the back yoke (24a).

## Description

### Technical Field

The present invention relates to a motor and a method of manufacturing a motor; a compressor; and an armature core and a technique for manufacturing an armature core.

### Background Art

Conventional motors include axial gap type motors in which a rotor and a stator face each other in a plane that is generally orthogonal to a rotation axis. In such axial gap type motors, the use of a core formed by laminating, in a direction of the rotation axis, thin plates (such as magnetic steel sheets) that are generally orthogonal to the rotation axis raises a problem that more eddy current is generated especially in teeth and in the vicinity thereof, because the direction of the lamination and a flow of magnetic flux become parallel.

Japanese Patent Application Laid-open No. 2000-253635 (patent document 1) has employed a stator core formed by laminating H-shaped magnetic steel sheets in a circumferential direction.

Japanese Patent Application Laid-open No. 2004-56860 (patent document 2) shows that a core is formed by a combination of magnetic steel sheets laminated in different directions.

Japanese Patent Application Laid-open No. 2005-80432 (patent document 3) has disclosed a technique for combining a dust core and a laminated steel sheet in radial gap type motors.

### Disclosure of Invention

However, patent document 1 has a problem that it limits the teeth shape because magnetic steel sheets stamped into the same shape are laminated.

Especially, for improved motor efficiency, a high-density location of teeth and coils become necessary. However, if constraints are added to the flexibility of the teeth shape as described above, it becomes difficult to design such a high-density location.

Patent document 2 allows a certain degree of flexibility in shape because the core is formed by a combination of magnetic steel sheets laminated in different directions. However, for achieving complicated shape, more than one kind of stamping dies are necessary, which has a problem that the manufacturing process is complicated.

While patent document 3 has disclosed a technique for combining a dust core and a laminated steel sheet in radial gap type motors, this technique is not applicable to axial gap type motors because the axial gap type motors basically differ in the flow of magnetic flux from two-dimensional motors.

If it is assumed that the whole stator core is formed of a dust core, the flexibility in shape is increased. However, in this case, since the dust core has low strength, it becomes difficult to adopt a configuration in which a stator core is held in a casing by press fitting, shrink fitting, or the like.

The first object of the invention is to facilitate the manufacture of a motor without impairing motor characteristics.

The second object is to further permit the holding of a stator core by press fitting, shrink fitting, or the like.

The third object is to further, at joints between teeth and a back yoke, prevent the radii of the teeth made by machining from interfering with angular portions of holes formed in the back yoke.

The fourth object is to, without impairing motor characteristics, ensure the strength of an armature core and securely hold the teeth and the back yoke with no clearance therebetween while preventing breakage of the teeth.

To achieve the first object described above, a motor according to a first aspect comprises a rotor (31, 431, 531, 831, 1031, 1431) rotating on a certain rotation axis (1020, 1420); and a stator (21, 121, 221, 321, 421, 721, 621, 821, 1021, 1421) including a stator core (24, 124, 224, 324, 424, 624, 724, 824, 1024, 1124, 1324, 1424) that faces the above-mentioned rotor (31, 431, 531, 831, 1031, 1431) with a space therebetween, and coils (23, 123, 223, 323, 423, 623, 723, 823, 1023, 1123, 1323, 1423) that are attached to the stator core (24, 124, 224, 324, 424, 624, 724, 824, 1024, 1124, 1324, 1424), wherein the above-mentioned stator core (24, 124, 224, 324, 424, 624, 724, 824, 1024, 1124, 1324, 1424) includes a generally disk-shaped back yoke (24a, 124a, 224a, 324a, 424a, 624a, 824a, 1024a, 1124a, 1324a, 1424a) that is generally orthogonal to the above-mentioned rotation axis (1020, 1420); and a plurality of teeth (24b, 124b, 224b, 324b, 424b, 624b, 724b, 824b, 1024b, 1124b, 1324b, 1424b) that are circumferentially located in an end face of the above-mentioned back yoke (24a, 124a, 224a, 324a, 424a, 624a, 824a, 1024a, 1124a, 1324a, 1424a) in a direction of the above-mentioned rotation axis so as to stand upright from the above-mentioned back yoke (24a, 124a, 224a, 324a, 424a, 624a, 824a, 1024a, 1124a, 1324a, 1424a) in the direction of the above-mentioned rotation axis and that are formed of a dust core made of pressed magnetic powder, and wherein the above-mentioned teeth (24b, 124b, 224b, 324b, 424b, 624b, 724b, 824b, 1024b, 1324b, 1424b) are buried to a certain depth in the direction of the above-mentioned rotation axis in the above-mentioned back yoke (24a, 124a, 224a, 324a, 424a, 624a, 824a, 1024a, 1324a, 1424a), or the above-mentioned teeth (24b, 124b, 224b, 324b, 424b, 624b, 724b, 824b, 1124b) are buried in the above-mentioned back yoke (24a, 124a, 224a, 324a, 424a, 624a, 824a, 1124a) to penetrate in the direction of the above-mentioned rotation axis.

Thus, a dust core made of pressed magnetic powder having a small eddy-current loss is used for the teeth that have large variations in magnetic flux density, i.e., contains a high harmonic content of magnetic flux, especially in the proximity of an air gap. Then, by burying the above-mentioned teeth axially to a certain depth in the back yoke, the back yoke passes magnetic flux almost in a plane that is orthogonal to the rotation axis. Or, by burying the above-mentioned teeth in the back yoke to penetrate axially, the back yoke passes magnetic flux almost in a plane that is orthogonal to the rotation axis. The teeth formed of a dust core can be manufactured with ease. This facilitates the manufacture of a motor without impairing motor characteristics. Since the above-mentioned plurality of teeth are formed separately of a dust core, only small molding pressure is required, which prevents upsizing of equipment. Further, the positioning of the teeth by the back yoke results in good air-gap accuracy. Still further, although it has conventionally been difficult to install axial gap type motors for relatively high power applications such as compressors, the invention allows the adoption of axial gap type motors for such applications.

To achieve the second object, according to a second aspect, the above-mentioned back yoke (24a, 124a, 224a, 324a, 424a, 624a, 824a) of the first aspect described above includes a laminated steel sheet formed by laminating, in the direction of the above-mentioned rotation axis, thin plates that are generally orthogonal to the above-mentioned rotation axis.

Accordingly, this motor uses a dust core made of pressed magnetic powder having a small eddy-current loss for the teeth that have large variations in magnetic flux density, i.e., contains a high harmonic content of magnetic flux, especially in the proximity of an air gap; and it uses a laminated steel sheet with high permeability and high saturation magnetic flux density for the back yoke that maintains relatively high magnetic flux density for a long period of time. Then, by burying the above-mentioned teeth axially to a certain depth in the back yoke, the back yoke formed by axially laminating thin plates passes magnetic flux almost in a plane that is orthogonal to the rotation axis. Or, by burying the above-mentioned teeth in the back yoke to penetrate axially, the back yoke formed by axially laminating thin plates passes magnetic flux almost in a plane that is orthogonal to the rotation axis. Thus, without impairing motor characteristics, the stator core can be held by press fitting, shrink fitting, or the like. Since the above-mentioned plurality of teeth are formed separately of a dust core, only small molding pressure is required, which prevents upsizing of equipment. Further, the positioning of the teeth by the back yoke results in good air-gap accuracy. Still further, although it has conventionally been difficult to install axial gap type motors for relatively high power applications such as compressors, the invention allows the adoption of axial gap type motors for such applications. As described, a dust core made of pressed magnetic powder having a small eddy-current loss is used for the teeth, and the back yoke of a laminated steel sheet with a sufficient strength can be held in a casing by press fitting or shrink fitting. This achieves a motor that can hold a stator core by press fitting, shrink fitting, or the like, without impairing motor characteristics.

According to a third aspect, in the motor according to the first or second aspect, portions of the above-mentioned plurality of teeth (124b, 224b) which are buried in the above-mentioned back yoke (124a, 224a) are thinner than the other portions thereof which are not buried in the above-mentioned back yoke (124a, 224a).

This facilitates positioning at the time of insertion, thereby improving air-gap accuracy.

According to a fourth aspect, in the motor according to the first or second aspect, portions of the above-mentioned plurality of teeth (224b) which are buried in the above-mentioned back yoke (224a) gradually taper down toward the tips so as to be thinner than the other portions thereof which are not buried in the above-mentioned back yoke (224a).

This allows the magnetic flux that passes through the portions of the teeth buried in the back yoke to gradually come out of the back yoke so that the magnetic flux decreases toward the ends. This also minimizes the amount of magnetic flux that passes through the inside of the teeth formed of a dust core so that the magnetic flux in the back yoke can pass through a plane that is as close to orthogonal as possible to the direction of the axis. Further, since uniform stress is applied at the insertion of the teeth into the back yoke, less breakage occurs. The tapered portions of the above-mentioned plurality of teeth can be used as removal tapers at the formation of a dust core. The form of the tapered portions of the above-mentioned plurality of teeth is not necessarily continuous and may be stepwise.

According to a fifth aspect, in the motor according to any one of the first to fourth aspects, there is clearance between the ends of the portions of the above-mentioned plurality of teeth (124b) which are buried in the above-mentioned back yoke (124a), and the above-mentioned back yoke (124a).

The presence of the clearance between the ends of the portions of the above-mentioned plurality of teeth which are buried in the back yoke and the back yoke prevents magnetic flux from axially passing through the back yoke, thereby suppressing an increase in iron loss with efficiency. Further, as will be described later, assembly can be made by referring to planes of the teeth on the sides facing the rotor and so as to absorb dimension errors by clearance, which reduces variations in performance or the like due to assembly errors.

According to a sixth aspect, in the motor according to any one of the first to fifth aspects, the above-mentioned back yoke (424a) of the above-mentioned stator (421) includes a plurality of recesses (424c) formed to receive the above-mentioned plurality of teeth (424b); and stress relaxation holes (401, 402) formed on at least either the inner or outer peripheral side of the above-mentioned plurality of recesses (424c).

The stress relaxation holes provided on at least either the inner or outer peripheral side of the plurality of recesses formed to receive the above-mentioned plurality of teeth can relax radial stress acting on the back yoke when the teeth are held by press fitting or the like in the back yoke. Further, the stress relaxation holes on the outer peripheral side can relax radial stress acting on the back yoke when the back yoke is held by press fitting, shrink fitting, or the like, thereby maintaining air-gap accuracy without impairing motor characteristics. The stress relaxation holes on the inner peripheral side, for example, can ensure perpendicularity to the axis when the inner periphery of the back yoke is used as a housing for holding a bearing.

According to a seventh aspect, in the motor according to the first or second aspect, the above-mentioned back yoke (624a) of the above-mentioned stator core (621) has notches (600) formed in an outer radial portion of a region where the above-mentioned plurality of teeth (624b) are located.

Providing the notches in the outer radial portion of the region where the plurality of teeth are located in the back yoke of the above-mentioned stator core allows the teeth to be inserted into the back yoke from the radially outer side for and at the time of assembly. Especially, assembly becomes easy even when the teeth protrude on both sides of the back yoke and they have wide portions on the sides facing the rotors located on both sides.

According to an eighth aspect, in the motor according to any one of the first to seventh aspects, the plurality of teeth (324b, 624b) of the above-mentioned stator core (321, 621) have wide portions (324d, 624c) provided on the sides facing the above-mentioned rotor (31).

This increases the area that faces the rotor, thereby enhancing flux linkage.

According to a ninth aspect, in the motor according to any one of the first to eighth aspects, the above-mentioned stator (21, 121, 221, 321, 421, 621, 721, 821) and the above-mentioned rotor (31, 431, 531, 831) face each other in a plane that is generally orthogonal to the above-mentioned rotation axis.

This reduces the axial dimension, thereby achieving downsizing.

According to a tenth aspect, in the motor according to any one of the first to ninth aspects, the above-mentioned stator (421) includes two stators located so as to sandwich the above-mentioned rotor (431) from both sides of the direction of the above-mentioned rotation axis.

This enhances flux linkage and improves output. Further, attractive forces acting on the above-mentioned rotors from the stators on both radial sides can cancel thrust force acting on the rotor and a shaft and can also reduce force acting in the thrust direction on a bearing that supports the shaft.

According to an eleventh aspect, in the motor according to any one of the first to tenth aspects, the above-mentioned rotor (31, 431, 531, 831) includes a permanent magnet (33, 433, 533).

Though the magnetic flux generated by the permanent magnet and thus containing a high harmonic content passes through the teeth of the stator core, the use of a dust core with a small eddy-current loss for the teeth allows a further reduction in iron loss. Further, although the dust core has lower permeability and a lower saturation magnetic flux density than magnetic steel sheets, influences thereof can be suppressed to minimum by the use of magnetic steel sheets for the back yoke that maintains a high magnetic flux density for a long period of time.

According to a twelfth aspect, in the motor according to any one of the first to eleventh aspects, an outer peripheral portion of the above-mentioned back yoke (24a, 124a, 224a, 324a, 424a, 624a, 824a) of the above-mentioned stator core (24, 124, 224, 324, 424, 624, 724, 824) is shrunk fitted or press fitted to the inside of a casing (10).

This ensures reliable holding of the back yoke in the casing. Further, the presence of the back yoke improves the strength of the casing and thereby reduces vibrations and noise.

To achieve the above-mentioned second object, a method of manufacturing a motor according to a thirteenth aspect is a method of manufacturing a motor that comprises a rotor (31, 431, 531, 831) rotating on a certain rotation axis; and a stator (21, 121, 221, 321, 421, 621, 721, 821) including a stator core (24, 124, 224, 324, 424, 624, 724, 824) that faces the above-mentioned rotor (31, 431, 531, 831) with a space therebetween, and coils (23, 123, 223, 323, 423, 623, 723, 823) that are attached to the stator core (24, 124, 224, 324, 424, 624, 724, 824), wherein the above-mentioned stator core (24, 124, 224, 324, 424, 624, 724, 824) of the above-mentioned stator (21, 121, 221, 321, 421, 621, 721, 821) includes a back yoke (24a, 124a, 224a, 324a, 424a, 624a, 824a) including a laminated steel sheet formed by laminating, in a direction of the above-mentioned rotation axis, thin plates that are generally orthogonal to the above-mentioned rotation axis; and a plurality of teeth (24b, 124b, 224b, 324b, 424b, 624b, 724b, 824b) that are circumferentially located in an end face of the above-mentioned back yoke (24a, 124a, 224a, 324a, 424a, 624a, 824a) in the direction of the above-mentioned rotation axis so as to stand upright from the above-mentioned back yoke (24a, 124a, 224a, 324a, 424a, 624a, 824a) in the direction of the above-mentioned rotation axis and that are formed of a dust core made of pressed magnetic powder, and wherein the above-mentioned teeth (24b, 124b, 224b, 324b, 424b, 624b, 724b, 824b) are buried to a curtain depth in the direction of the above-mentioned rotation axis in the above-mentioned back yoke (24a, 124a, 224a, 324a, 424a, 624a, 824a), or the above-mentioned teeth (24b, 124b, 224b, 324b, 424b, 624b, 724b, 824b) are buried in the above-mentioned back yoke (24a, 124a, 224a, 324a, 424a, 624a, 824a) to penetrate in the direction of the above-mentioned rotation axis. The method comprises the step of placing the above-mentioned coils (23, 123, 223, 323, 423, 623, 723, 823) previously wound in a certain shape either on the above-mentioned back yoke (24a, 124a, 224a, 324a, 424a, 624a, 824a) or around the above-mentioned teeth (24b, 124b, 224b, 324b, 424b, 624b, 724b, 824b); and the step of, after placing the above-mentioned coils (23, 123, 223, 323, 423, 623, 723, 823), joining the above-mentioned back yoke (24a, 124a, 224a, 324a, 424a, 624a, 824a) and the above-mentioned plurality of teeth (24b, 124b, 224b, 324b, 424b, 624b, 724b, 824b) together.

This facilitates the manufacture of a motor that can hold the stator core by press fitting, shrink fitting, or the like without impairing motor characteristics. Further, joining the back yoke and the plurality of teeth together after placing on the back yoke the coils previously wound in a certain shape facilitates the assembly of the stator core. Or, joining the back yoke and the plurality of teeth together after placing around the teeth the coils previously wound in a certain shape facilitates the assembly of the stator core.

A fourteenth aspect is directed to the method of manufacturing a motor according to the thirteenth aspect, wherein the above-mentioned stator (321) and the above-mentioned rotor (31) face each other in a plane that is generally orthogonal to the above-mentioned rotation axis, and in the step of joining the above-mentioned back yoke (324a) and the above-mentioned plurality of teeth (324b) together, planes of the above-mentioned teeth (324b) on the sides facing the above-mentioned rotor (31) are referred to to join the above-mentioned back yoke (324a) and the above-mentioned plurality of teeth (324b) together.

Joining the back yoke and the plurality of teeth together with reference to the planes of the above-mentioned teeth on the sides facing the rotor improves air-gap accuracy.

To achieve the first object, a compressor according to a fifteenth aspect installs the motor according to any one of the first to eleventh aspects.

By allowing the installation of the above-mentioned motor that is an axial gap type motor which has been difficult to install for relatively high power applications, a scaled-down and high-efficiency (resulting from a reduction in iron loss) compressor can be achieved.

To achieve the third object, a motor according to a sixteenth aspect is such that, in the motor according to the first aspect, portions of the above-mentioned plurality of teeth (1024b, 1124b, 1324b, 1424b) which are buried in the above-mentioned back yoke (1024a, 1124a, 1324a, 1424a) are thinner than the other portions thereof which are not buried in the above-mentioned back yoke (1024a, 1124a, 1324a, 1424a), and a first insulating material (1051, 1151, 1251, 1351) for insulating the above-mentioned back yoke (1024a, 1124a, 1324a, 1424a) and the above-mentioned coils (1023, 1123, 1323, 1423) is sandwiched between the above-mentioned teeth (1024b, 1124b, 1324b, 1424b) and the above-mentioned back yoke (1024a, 1124a, 1324a, 1424a).

Thus, a dust core made of pressed magnetic powder having a small eddy-current loss is used for the teeth that have large variations in magnetic flux density, i.e., contains a high harmonic content of magnetic flux, especially in the proximity of an air gap. Further, a laminated steel sheet with high permeability and a high saturation magnetic flux density is used for the back yoke that maintains a relatively high magnetic flux density for a long period of time. Then, by burying the above-mentioned teeth axially to a certain depth in the back yoke or by burying the above-mentioned teeth in the back yoke to penetrate axially, the back yoke passes a large amount of magnetic flux almost in a plane that is orthogonal to the rotation axis. This prevents impairment of motor characteristics. Further, the presence of the first insulating material sandwiched between the back yoke and the coils to provide insulation between the back yoke and the coils prevents, at the joints between the teeth and the back yoke, the radii of the teeth made by machining from interfering with angular portions of holes formed in the back yoke.

Since the above-mentioned plurality of teeth are formed separately of a dust core, only small molding pressure is required, which prevents upsizing of equipment. Further, the positioning of the teeth by the back yoke results in good air-gap accuracy. Still further, although it has conventionally been difficult to install axial gap type motors for relatively high power applications such as compressors, the application of the motor according to the invention allows the adoption of axial gap type motors for such applications.

A seventeenth aspect is directed to the motor according to the sixteenth aspect, wherein the above-mentioned back yoke (1024a, 1124a, 1324a, 1424a) includes a laminated steel sheet formed by laminating, in the direction of the above-mentioned rotation axis, thin plates that are generally orthogonal to the above-mentioned rotation axis (1020, 1420).

Since the above-mentioned back yoke includes a laminated steel sheet formed by laminating, in the direction of the above-mentioned rotation axis, thin plates that are generally orthogonal to the above-mentioned rotation axis (1020, 1420), a material with high permeability and high saturation magnetic flux density can be used for the back yoke that maintains a relatively high magnetic flux density for a long period of time. By burying the above-mentioned teeth axially to a certain depth in the back yoke or by burying the above-mentioned teeth in the back yoke to penetrate axially, the back yoke formed by axially laminating thin plates passes magnetic flux almost in a plane that is orthogonal to the rotation axis. This, without impairing motor characteristics, achieves high efficiency and allows the stator core to be readily held by press fitting, shrink fitting, or the like.

An eighteenth aspect is directed to the motor according to either the sixteenth or seventeenth aspect, wherein the above-mentioned first insulating material (1051, 1151, 1251, 1351) is insulating film with a hole (1051a) having a shape that is larger than the cross section of the portions of the above-mentioned plurality of teeth (1024b, 1124b, 1324b, 1424b) which are buried in the above-mentioned back yoke (1024a, 1124a, 1324a, 1424a) and that is smaller than the cross section of the other portions thereof which are not buried in the above-mentioned back yoke (1024a, 1124a, 1324a, 1424a).

By providing insulation between the back yoke and the coils through the use of the first insulating material that is insulating film provided with a hole having a shape that is larger than the cross section of the portions of the above-mentioned plurality of teeth which are buried in the back yoke and that is smaller than the cross section of the other portions thereof which are not buried in the back yoke, clearance between the back yoke and the coils can be defined by the thickness of the insulating film. This further improves air-gap accuracy.

A nineteenth aspect is directed to the motor according to either the sixteenth or seventeenth aspect, wherein a second insulating material (1152, 1252, 1262, 1352) for insulating the above-mentioned tenth (1024b, 1124b, 1324b, 1424b) and coils (1023, 1123, 1323, 1423) is sandwiched between the above-mentioned tenth (1024b, 1124b, 1324b, 1424b) and the coils (1023, 1123, 1323, 1423), and the above-mentioned second insulating material (1152, 1252, 1262, 1352) is insulating film that is wound around the periphery of the other portions of the above-mentioned plurality of teeth (1024b, 1124b, 1324b, 1424b) which are not buried in the above-mentioned back yoke (1024a, 1124a, 1324a, 1424a).

The use of the second insulating material that is insulating film wound around the periphery of the other portions of the plurality of teeth which are not buried in the back yoke, facilitates the provision of insulation between the teeth and the coils.

A twelfth aspect is directed to the motor according to either the sixteenth or seventeenth aspect, wherein a second insulating material (1152, 1252, 1262, 1352) for insulating the above-mentioned tenth (1024b, 1124b, 1324b, 1424b) and the coils (1023, 1123, 1323, 1423) is sandwiched between the above-mentioned tenth (1024b, 1124b, 1324b, 1424b) and the coils (1023, 1123, 1323, 1423); the above-mentioned first insulating material (1151, 1251, 1351) is a first resin molded material provided with a hole having a shape that is larger than the cross section of portions of the above-mentioned plurality of teeth (1024b, 1124b, 1324b, 1424b) which are buried in the above-mentioned back yoke (1024a, 1124a, 1324a, 14024a) and that is smaller than the cross section of the other portions thereof which are not buried in the above-mentioned back yoke (1024a, 1124a, 1324a, 1424a); the above-mentioned second insulating material (1152, 1252, 1262, 1352) is a second resin molded material that covers the periphery of the other portions of the above-mentioned plurality of teeth (1024b, 1124b, 1324b, 1424b) which are not buried in the above-mentioned back yoke (1024a, 1124a, 1324a, 1424a); and the above-mentioned first resin molded material and the above-mentioned second resin molded material are integral with each other.

This reduces the number of parts and facilitates assembly.

A twenty-first aspect is directed to the motor according to either the sixteenth or seventeenth aspect, wherein the above-mentioned plurality of teeth (1324b) of the above-mentioned stator core (1324) have wide portions (1324d) provided on the sides facing the above-mentioned rotor (1431); a second insulating material (1352) for insulating the above-mentioned teeth (1324b) and the above-mentioned coils (1323) is sandwiched between the above-mentioned teeth (1324b) and the above-mentioned coils (1323); a third insulating material (1353) for insulating the above-mentioned coils (1323) and the above-mentioned wide portions (1324d) is sandwiched between the above-mentioned coils (1323) and the above-mentioned wide portions (1324d); the above-mentioned second insulating material (1352) is a second resin molded material that covers the periphery of the other portions of the above-mentioned plurality of teeth (1324b) which are not buried in the above-mentioned back yoke (1324a); the above-mentioned third insulating material (1353) is a third resin molded material; and the above-mentioned second resin molded material and the above-mentioned third resin molded material are integral with each other.

This reduces the number of parts and facilitates assembly.

A twenty-second aspect is directed to the motor according to any one of the sixteenth to twenty-first aspects, wherein the above-mentioned stator (1021, 1421) and the above-mentioned rotor (131, 1431) face each other in a plane that is generally orthogonal to the above-mentioned rotation axis (1020, 1420).

Since this is an axial gap type motor in which the above-mentioned stator and rotor face each other in a plane that is generally orthogonal to the rotation axis, it can be downsized by reducing the axial dimension.

A twenty-third aspect is directed to the motor according to any one of the sixteenth to twenty-second aspects, wherein the above-mentioned rotor (1031, 1431) includes a permanent magnet (1033, 1433).

Thus, although the magnetic flux generated by the permanent magnet and thus containing a high harmonic content passes through the teeth of the stator core, the use of a dust core with a small eddy-current loss for the teeth allows a further reduction in iron loss. Further, although the dust core has lower permeability and a lower saturation magnetic flux density than magnetic steel sheets, influences thereof can be suppressed to minimum by the use of, for example, magnetic steel sheets for the back yoke that maintains a high magnetic flux density for a long period of time.

To achieve the third object, a method of manufacturing a motor according to a twenty-fourth aspect is for manufacturing a motor that comprises a rotor (1031, 1431) rotating on a certain rotation axis (1020, 1420); and a stator (1021, 1421) including a stator core (1024, 1124, 1324, 1424) that faces the above-mentioned rotor (1031, 1431) with a space therebetween, and coils (1023, 1123, 1323, 1423) that are attached to the stator core (1024, 1124, 1324, 1424), wherein the above-mentioned stator core (1024, 1124, 1324, 1424) of the above-mentioned stator (1021, 1421) includes a generally disk-shaped back yoke (1024a, 1124a, 1324a, 1424a) that is generally orthogonal to the above-mentioned rotation axis (1020, 1420); and a plurality of teeth (1024b, 1124b, 1324b, 1424b) that are circumferentially located in an end face of the above-mentioned back yoke (1024a, 1124a, 1324a, 1424a) in a direction of the above-mentioned rotation axis so as to stand upright from the above-mentioned back yoke (1024a, 1124a, 1324a, 1424a) in the direction of the above-mentioned rotation axis and that are formed of a dust core made of pressed magnetic powder, and wherein the above-mentioned teeth (1024b, 1324b, 1424b) are buried to a certain depth in the direction of the above-mentioned rotation axis in the above-mentioned back yoke (1024a, 1324a, 1424a), or the above-mentioned teeth (1124b) are buried in the above-mentioned back yoke (1124a) to penetrate in the direction of the above-mentioned rotation axis. The method comprises the step of placing, around the above-mentioned teeth (1024b, 1124b, 1324b, 1424b), a first insulating material (1051, 1151, 1251, 1351) for insulating the above-mentioned back yoke (1024a, 1124a, 1324a, 1424a) and the above-mentioned coils (1023, 1123, 1323, 1423) and a second insulating material (1152, 1252, 1262, 1352) for insulating the above-mentioned teeth (1024b, 1124b, 1324b, 1424b) and the above-mentioned coils (1023, 1123, 1323, 1423); the step of winding the above-mentioned coils (1023, 1123, 1323, 1423) around the above-mentioned second insulating material (1152, 1252, 1262, 1352); and the step of, after winding the above-mentioned coils (1023, 1123, 1323, 1423), joining the above-mentioned back yoke (1024a, 1124a, 1324a, 1424a) and the above-mentioned plurality of teeth (1024b, 1124b, 1324b, 1424b) together.

This facilitates the manufacture of a motor, in which the radii of the teeth made by machining does not interfere with angular portions of holes formed in the back yoke at the joins between the teeth and the back yoke, without impairing motor characteristics. Further, joining the back yoke and the plurality of teeth together after placing on the back yoke the coils previously wound in a certain shape facilitates the assembly of the stator core. Or, joining the back yoke and the plurality of teeth together after placing around the teeth the coils previously wound in a certain shape facilitates the assembly of the stator core.

To achieve the third object, a method of manufacturing a motor according to a twenty-fifth aspect is for manufacturing a motor that comprises a rotor (1031, 1431) rotating on a certain rotation axis (1020, 1420); and a stator (1021, 1421) including a stator core (1024, 1124, 1324, 1424) that faces the above-mentioned rotor (1031, 1431) with a space therebetween, and coils (1023, 1123, 1323, 1423) that are attached to the stator core (1024, 1124, 1324, 1424), wherein the above-mentioned stator core (1024, 1124, 1324, 1424) of the above-mentioned stator (1021, 1421) includes a generally disk-shaped back yoke (1024a, 1124a, 1324a, 1424a) that is generally orthogonal to the above-mentioned rotation axis (1020, 1420); and a plurality of teeth (1024b, 1124b, 1324b, 1424b) that are circumferentially located in an end face of the above-mentioned back yoke (1024a, 1124a, 1324a, 1424a) in a direction of the above-mentioned rotation axis so as to stand upright from the above-mentioned back yoke (1024a, 1124a, 1324a, 1424a) in the direction of the above-mentioned rotation axis, and that are formed of a dust core made of pressed magnetic powder, and wherein the above-mentioned teeth (1024b, 1324b, 1424b) are buried to a certain depth in the direction of the above-mentioned rotation axis in the above-mentioned back yoke (1024a, 1324a, 1424a), or the above-mentioned teeth (1124b) are buried in the above-mentioned back yoke (1124a) to penetrate in the direction of the above-mentioned rotation axis. The method includes the step of winding the above-mentioned coils (1023, 1123, 1323, 1423) around a first insulating material (1051, 1151, 1251, 1351) for insulating the above-mentioned back yoke (1024a, 1124a, 1324a, 1424a) and the above-mentioned coils (1023, 1123, 1323, 1423) and a second insulating material (1152, 1252, 1262, 1352) for insulating the above-mentioned teeth (1024b, 1124b, 1324b, 1424b) and the above-mentioned coils (1023, 1123, 1323, 1423), the first insulating material and the second insulating material being located around a bobbin having a winding portion of generally the same shape as the above-mentioned teeth (1024b, 1124b, 1324b, 1424b); the step of fitting the above-mentioned first insulating material (1051, 1151, 1251, 1351), the above-mentioned second insulating material (1152, 1252, 1262, 1352), and the above-mentioned coils (1023, 1123, 1323, 1423) on the above-mentioned teeth (1024b, 1124b, 1324b, 1424b); and the step of joining the above-mentioned back yoke (1024a, 1124a, 1324a, 1424a) and the above-mentioned plurality of teeth (1024b, 1124b, 1324b, 1424b) together.

This facilitates the manufacture of a motor, in which the radii of the teeth made by machining does not interfere with angular portions of holes formed in the back yoke at the joints between the teeth and the back yoke, without impairing motor characteristics. Further, winding the coils around the first insulating material and the second insulating material which are located around a core having a winding portion of generally the same shape as the teeth and then fitting the first insulating material and the second insulating material wound with the coils facilitates the assembly of the stator core. Thus, the stator core can be assembled with ease, for example when it is difficult to fix the teeth with a jig or when only applying a strong tension at the time of winding the coils around the teeth is insufficient in strength.

A twenty-sixth aspect is directed to the method of manufacturing a motor according to the twenty-fourth aspect, wherein the above-mentioned stator (1021) and the above-mentioned rotor (1031) face each other in a plane that is generally orthogonal to the above-mentioned rotation axis (1020), and in the step of joining the above-mentioned back yoke (1324a) and the above-mentioned plurality of teeth (1324b) together, planes of the above-mentioned teeth (13 24b) on the sides facing the above-mentioned rotor (1031) are referred to to join the above-mentioned back yoke (1324a) and the above-mentioned plurality of teeth (1324b) together.

Joining the back yoke and the plurality of teeth together with reference to the planes of the above-mentioned teeth on the sides facing the rotor improves air-gap accuracy.

A twenty-seventh aspect is directed to the method of manufacturing a motor according to the twenty-fifth aspect, wherein the above-mentioned stator (1021) and the above-mentioned rotor (1031) face each other in a plane that is generally orthogonal to the above-mentioned rotation axis (1020), and in the step of joining the above-mentioned back yoke (1324a) and the above-mentioned plurality of teeth (1324b) together, planes of the above-mentioned teeth (1324b) on the sides facing the above-mentioned rotor (1031) are referred to to join the above-mentioned back yoke (1324a) and the above-mentioned plurality of teeth (1324b) together.

Joining the back yoke and the plurality of teeth together with reference to the planes of the above-mentioned teeth on the sides facing the rotor improves air-gap accuracy.

To achieve the third object, a compressor according to a twenty-eighth aspect installs the motor according to any one of the sixteenth to twenty-third aspects.

By allowing the installation of the above-mentioned motor that is an axial gap type motor which has been difficult to install for relatively high power applications, a scaled-down and high-efficiency (resulting from a reduction in iron loss) compressor can be achieved.

To achieve the fourth object, a method of manufacturing an armature core according to a twenty-ninth aspect is for manufacturing an armature core (2032, 2032G, 2132) that comprises a generally disk-shaped back yoke (2034, 2034G, 2134) having a major surface that is generally perpendicular to an axis (2018a); and a plurality of teeth (2036, 2036G, 2136, 2136B) placed and fixed around the above-mentioned axis so as to protrude from one major surface of the above-mentioned back yoke. The method includes the step (a) of forming the back yoke with teeth fixing recesses (2034h, 2034Bh, 2034Ch, 2034Dh, 2134h) of a laminated steel sheet formed by laminating thin plates along a direction of the above-mentioned axis; and the step (b) of, with the above-mentioned back yoke fixed in a molding die (2050, 2052), molding the above-mentioned teeth of a dust core so that the teeth protrude into and out of the above-mentioned teeth fixing recesses.

By forming the back yoke of a laminated steel sheet and the teeth of a dust core, the strength of the stator core can be ensured without impairment of motor characteristics. Further, forming the back yoke with the teeth fixing recesses and, with this back yoke fixed in a molding die, molding the teeth of a dust core so that the teeth protrude into and out of the teeth fixing recesses, the teeth and the back yoke can be held securely with no clearance therebetween while preventing breakage of the teeth.

A thirtieth aspect is directed to the method of manufacturing an armature core according to the twenty-ninth aspect, wherein the teeth fixing recesses (2034Ch, 2034Dh) have projections and/or depressions (2034Dha) formed therein.

This effectively prevents the teeth from coming off.

A thirty-first aspect is directed to the method of manufacturing an armature core according to a thirty-second aspect, wherein the projections and/or depressions have abutment surfaces (2034Cha, 2034Dhb) opposite to a direction of protrusion of the teeth.

This effectively prevents the teeth from coming off in the direction of their protrusion.

A thirty-second aspect is directed to the method of manufacturing an armature core according to any one of the twenty-ninth to thirty-first aspects, wherein the above-mentioned step (a) is the step of forming divided back yokes (2135, 2135B) that are divided according to the plurality of teeth, and the above-mentioned step (b) is the step of, with each of the divided back yokes fixed in a molding die, molding the above-mentioned teeth (2136, 2136B) of a dust core so that the teeth protrude into and out of the above-mentioned teeth fixing recesses. The method further includes, after the step (b), the step (c) of integrating each of the divided back yokes together.

In the above-mentioned step (a), the divided back yokes are formed which are divided according to each of the teeth, and in the above-mentioned step (b), with each of the above-mentioned divided back yokes fixed in a molding die, the teeth are molded of a dust core so that the teeth protrude into and out of the above-mentioned teeth fixing recesses. This allows the use of a small molding die and facilitates handling.

A thirty-third aspect is directed to the method of manufacturing an armature core according to the thirty-second aspect, wherein the above-mentioned teeth have, at the ends thereof, flange portions (2136a) formed to protrude outwardly of the ends.

This increases the area that faces a field, thereby enhancing flux linkage.

A thirty-fourth aspect is directed to the method of manufacturing an armature core according to either the thirty-second or thirty-third aspect, wherein the method further includes, between the above-mentioned steps (b) and (c), the step of winding coils (2040) around the teeth.

Forming the divided back yokes in this way facilitates the winding of the coils around the teeth.

A thirty-fifth aspect is directed to the method of manufacturing an armature core according to any one of the twenty-ninth to thirty-fourth aspects, wherein teeth (2036G, 2136B) are also provided on the other major surface of the above-mentioned back yoke opposite to the above-mentioned one major surface.

As to the teeth on the other major surface, also, the back yoke can be held securely with low magnetic reluctance.

A thirty-sixth aspect is directed to the method of manufacturing an armature core according to any one of the twenty-ninth to thirty-fifth aspects, wherein angular portions of the above-mentioned teeth (2036, 2036G, 2136, 2136B) which are wound with the coils (2040, 2040E) are rounded.

This prevents chipping of the angular portions and expansion of the coil winding.

A thirty-seventh aspect is directed to the method of manufacturing an armature core according to the thirty-sixth aspect, wherein the radii of the above-mentioned rounded angular corners are not less than twice the diameters of the winding coils.

This effectively prevents expansion of the coil winding.

To achieve the fourth aspect, an armature core according to a thirty-eighth aspect is an armature core (2032, 2032G, 2132) that include a generally disk-shaped back yoke (2034, 2034G, 2134) having a major surface generally perpendicular to an axis (2018a); and teeth (2036, 2036G, 2136, 2136B) that are placed and fixed around the above-mentioned axis so as to protrude from one major surface of the above-mentioned back yoke, wherein the above-mentioned back yoke is formed of a laminated steel sheet formed by laminating thin plates along a direction of the above-mentioned axis and has teeth fixing recesses (2034h, 2034Bh, 2034Ch, 2034Dh, 2134h), and the above-mentioned teeth are molded of a dust core so as to be integral with the above-mentioned teeth fixing recesses of the above-mentioned back yoke.

By forming the back yoke of a laminated steel sheet and the teeth of a dust core, the strength of the stator core can be ensured without impairment of motor characteristics. Further, by molding the teeth of a dust core so as to be integral with the above-mentioned teeth fixing recesses in the above-mentioned back yoke, the teeth and the back yoke can be held securely with no clearance therebetween, while preventing breakage of the teeth.

These and other objects, features, aspects and advantages of the present invention will become more apparent from the following detailed description of the present invention when taken in conjunction with the accompanying drawings.

### Brief Description of Drawings

[FIG. 1] Fig. 1 is a cross-sectional view of the outlines of a motor according to embodiment A1.
[FIG. 2] Fig. 2 is an exploded perspective view of a stator of the motor shown in Fig. 1.
[FIG. 3] Fig. 3 is a cross-sectional view showing a first alternative example of the motor according to the above-mentioned embodiment A1.
[FIG. 4] Fig. 4 is a cross-sectional view showing a second alternative example of the motor according to the above-mentioned embodiment A1.
[FIG. 5] Fig. 5 is a cross-sectional view showing a third alternative example of the motor according to the above-mentioned embodiment A1.
[FIG. 6] Fig. 6 is a diagram for explaining a method of manufacturing the above-mentioned first alternative example of the motor.
[FIG. 7] Fig. 7 is a plan view of the stator of the above-mentioned motor.
[FIG. 8] Fig. 8 is a plan view of the stator other than wide portions in the above-mentioned motor.
[FIG. 9] Fig. 9 is a cross-sectional view showing a fourth alternative example of the motor according to the above-mentioned embodiment A1.
[FIG. 10] Fig. 10 is a exploded perspective view of the stator in the fourth alternative example of the motor shown in Fig. 9.
[FIG. 11] Fig. 11 is an exploded perspective view of the stator shown in Fig. 10 when stress relaxation holes are formed in the back yoke.
[FIG. 12] Fig. 12 is an exploded perspective view showing the shape of a rotor with a stator on one side.
[FIG. 13] Fig. 13 is a cross-sectional views of the outlines of a motor according to embodiment A2.
[FIG. 14] Fig. 14 is an exploded perspective view showing the shape of a rotor with stators on both sides.
[FIG. 15] Fig. 15 is a cross-sectional view of the outlines of a motor according to embodiment A3.
[FIG. 16] Fig. 16 is an exploded perspective view showing the shape of a stator of the above-mentioned motor.
[FIG. 17] Fig. 17 is an exploded perspective view showing an example of a stator with a distributed winding.
[FIG. 18] Fig. 18 is a cross-sectional view of the outlines of a motor according to embodiment A4.
[FIG. 19] Fig. 19 is a longitudinal cross-sectional view of a closed compressor according to embodiment A5.
[FIG. 20] Fig. 20 is a cross-sectional view of the outlines of a motor according to embodiment B1.
[FIG. 21] Fig. 21 is an exploded perspective view of a stator of the motor shown in Fig. 20.
[FIG. 22] Fig. 22 is an enlarged cross-sectional view of the above-mentioned motor.
[FIG. 23] Fig. 23 is a cross-sectional view showing a first alternative example of the above-mentioned motor.
[FIG. 24] Fig. 24 is a cross-sectional view showing a second alternative example of the above-mentioned motor.
[FIG. 25] Fig. 25 is a cross-sectional view showing a third alternative example of the above-mentioned motor.
[FIG. 26] Fig. 26 is a cross-sectional view showing a fourth alternative example of the above-mentioned motor.
[FIG. 27] Fig. 27 is a cross-sectional view showing a fifth alternative example of the above-mentioned motor.
[FIG. 28] Fig. 28 is a view for explaining a method of manufacturing the fifth alternative example of the motor shown in Fig. 27.
[FIG. 29] Fig. 29 is a plan view of a stator of the above-mentioned motor.
[FIG. 30] Fig. 30 is a plan view of the stator other than wide portions in the above-mentioned motor.
[FIG. 31] Fig. 31 is a view showing one example of a rotor of a motor with a stator on one side according to embodiment B 1 of the invention.
[FIG. 32] Fig. 32 is a longitudinal cross-sectional view of a closed rotary compressor equipped with a motor according to embodiment B2.
[FIG. 33] Fig. 33 is a cross-sectional view of the outlines of a motor according to embodiment B3.
[FIG. 34] Fig. 34 is a cross-sectional view showing an axial gap type motor according to embodiment C1.
[FIG. 35] Fig. 35 is an exploded perspective view showing an armature core and coils.
[FIG. 36] Fig. 36 is a flow chart showing a method of manufacturing an armature core according to embodiment C 1.
[FIG. 37] Fig. 37 is an explanatory diagram showing one step in the above-mentioned manufacturing method.
[FIG. 38] Fig. 38 is a cross-sectional view showing a first alternative example of teeth fixing recesses according to embodiment C1.
[FIG. 39] Fig. 39 is a cross-sectional view showing a second alternative example of the teeth fixing recesses according to embodiment C1.
[FIG. 40] Fig. 40 is a cross-sectional view showing a third alternative example of the teeth fixing recesses according to embodiment C1.
[FIG. 41] Fig. 41 is a view showing an alternative example of the winding of coils according to embodiment C1.
[FIG. 42] Fig. 42 is a view showing an alternative example according to embodiment C1 in which stators are placed on both sides of a rotor.
[FIG. 43] Fig. 43 is a view showing another alternative example according to embodiment C1, in which rotors are placed on both sides of a stator.
[FIG. 44] Fig. 44 is a perspective view showing an armature core according to embodiment C2.
[FIG. 45] Fig. 45 is an explanatory view showing one step in the manufacturing method according to embodiment C2.
[FIG. 46] Fig. 46 is an explanatory view showing one step in the manufacturing method according to embodiment C2.
[FIG. 47] Fig. 47 is an explanatory view showing one step in the manufacturing method according to embodiment C2.
[FIG. 48] Fig. 48 is a flow chart showing the manufacturing method according to embodiment C2.
[FIG. 49] Fig. 49 is a perspective view showing an alternative example of a divided back yoke with the teeth formed on both surface sides according to embodiment C2.
[FIG. 50] Fig. 50 is a cross-sectional view showing a compressor according to embodiment C3.

### Best Mode for Carrying Out the Invention

### (Embodiment A1)

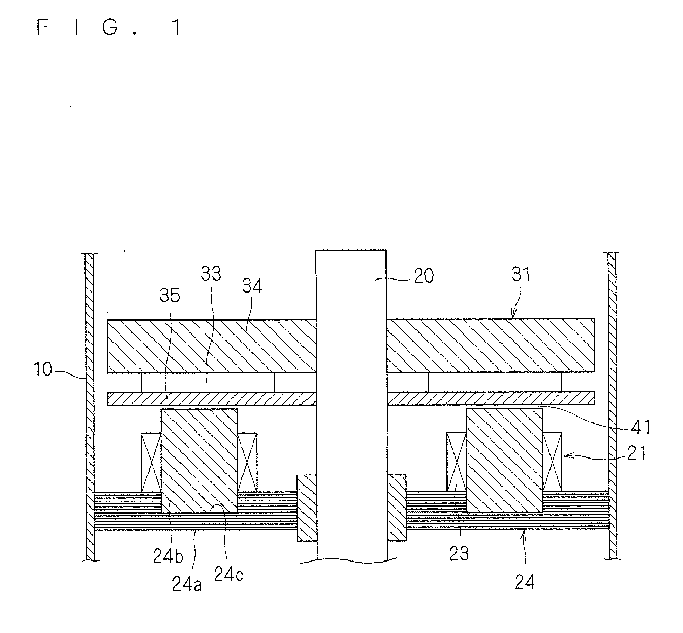

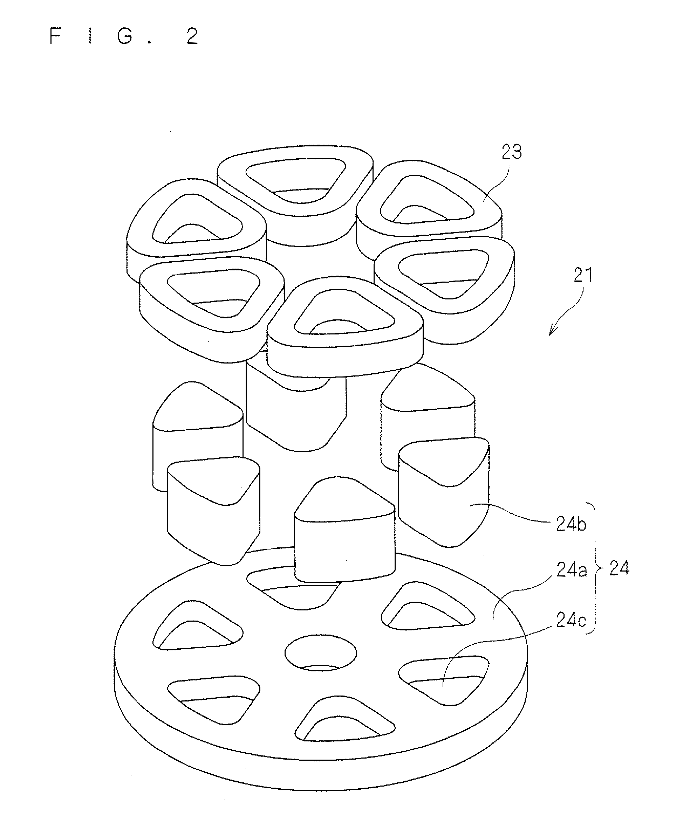

Fig. 1 is a cross-sectional view of the outlines of a motor according to embodiment A1, and Fig. 2 is an exploded perspective view of a stator of the motor shown in Fig. 1.

The motor according to this embodiment A1, as shown in Fig. 1, includes a stator 21, a rotor 31 located above this stator 21 with an air gap 41 therebetween, and a shaft 20 that is fixed to this rotor 31 and transmits a torque of this rotor 31 to a load and that extends out of this rotor 31 to be rotatably supported by a bearing (not shown). The above-mentioned rotor 31 rotates on the axis of the shaft 20, or a certain rotation axis.

The above-mentioned stator 21 includes a stator core 24 attached to the inside of a casing 10 by, for example, press fitting or shrink fitting, and coils 23 attached to this stator core 24.

The above-mentioned stator core 24 includes an annular ring-shaped back yoke 24a located so as to be generally orthogonal to the shaft 20, and teeth 24b located upright on the rotor 31 side of this back yoke 24a.

The teeth 24b of the above-mentioned stator core 24 extend axially of the shaft 20 toward the rotor 31 side, and there are a plurality of teeth 24b located around the shaft 20. The coils 23 are wound around the axes of the above-mentioned teeth 24b. The above-mentioned coils 23 are magnetized to generate axial magnetic flux in the teeth 24b. The above-mentioned coils 23 have a so-called "concentrated winding" around the stator core 24. This "concentrated winding" is a pattern of winding that allows easy winding and a reduction in the amount of copper.

The above-mentioned teeth 24b and coils 23 each are six in number as shown in Fig. 2, so that the stator 21 has four poles. That is, this stator 21 is considered as being equivalent to having a 4-pole 6-slot concentrated winding structure. The coils 23 are, for example, circumferentially arranged in the order of U-phase, V-phase, W-phase, U-phase, V-phase and W-phase, and each three phases are star-connected so that current is supplied from an inverter. The teeth 24b are formed of a dust core and partly buried and fixed in recesses 24c formed in the back yoke 24a that is formed by axially laminating magnetic steel sheets generally orthogonal to the shaft 20. Thereby, the teeth 24b protrude independently but are linked through the back yoke 24a. As means for fixing the teeth 24b, press fitting, bonding, or the like is employed. Examples of dust cores include iron-dust cores. Magnetic steel sheets are so-called silicon steel sheets, but they may be thin plates of amorphous, permalloy, or the like. The selection is made according to the required properties.

It is desirable that the depths of the recesses 24c in the back yoke 24a be within the range that magnetic flux has the axial component. For example, when the magnetic flux density of the back yoke 24a is approximately close to the saturation region, it is desirable that the depths of the recesses 24c be approximately equivalent to the thickness of the back yoke 24a, or that the teeth 24b penetrate the back yoke 24a. In general, the depths of the recesses 24c need to be not less than half of the thickness of the back yoke 24a. By so doing, magnetic flux passes into the back yoke 24a of a laminated steel sheet after it has passed and reached a sufficient depth through a dust core, which results in low magnetic reluctance and small iron loss. The magnetic flux passing through the back yoke 24a is divided into two flows: the one flowing into each of the teeth 24b; and the one flowing through each of the teeth 24b and then into adjacent teeth 24b. The latter passes through the back yoke 24a formed of a laminated steel sheet.

As shown in Fig. 1, the above-mentioned rotor 31 includes an annular ring-shaped back yoke 34 attached to the shaft 20, and a permanent magnet 33 provided on one surface of this back yoke 34 on the stator 21 side. The inside diameter of the back yoke 24a of the above-mentioned stator core 24 is so great as not to be in contact with the shaft 20. Alternatively, as shown in Fig. 1, a bearing for receiving the shaft 20 may be provided on the inside diameter.

The back yoke 34 of the above-mentioned rotor 31 is made of a magnetic material. The above-mentioned permanent magnet 33 has alternately different magnetic poles arranged in the circumferential direction of the shaft 20 and generates magnetic flux in a direction along the shaft 20.

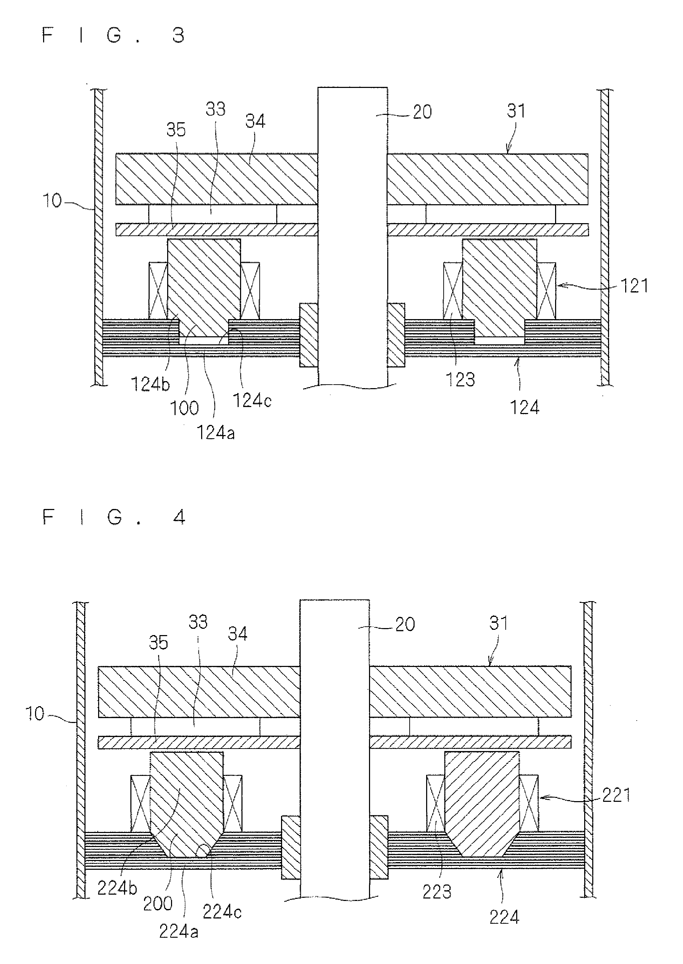

Fig. 3 is a cross-sectional view of a first alternative example of the motor according to the above-mentioned embodiment A1. In this motor, the same components as those of the motor shown in Fig. 1 are designated by the same reference numerals or characters.

As shown in Fig. 3, buried portions 100 of teeth 124b which are buried in a back yoke 124a are thinner than the other portions thereof, by which the positioning at the time of insertion is determined. This improves air-gap accuracy.

Clearance is provided between the ends of the portions of the above-mentioned plurality of teeth 124b which are buried in recesses 124c in the back yoke 124a and the back yoke 124a so as to avoid axial contact between the teeth 124b and the back yoke 124a in the recesses 124c. This can prevent an axial flow of magnetic flux within the back yoke 124a, thereby effectively suppressing an increase in iron loss. When the back yoke 124a is used in the magnetic saturation region, the clearance should preferably be as small as possible so that a magnetic adhesive may be filled therein. Although magnetic adhesives have considerably lower magnetic permeability than magnetic steel sheets or dust cores, they have higher magnetic permeability than air and thus have the effect of reducing magnetic saturation. However, except at the bottoms, the recesses have no clearance between the teeth 124b and the back yoke 124a. Although many types of dies are necessary if the teeth 124b are formed of a laminated steel sheet, the use of a dust core for the teeth 124b here allows easy manufacture.

Fig. 4 is a cross-sectional view of a second alternative example of the motor according to the above-mentioned embodiment A1. In Fig. 4, the same components as those of the motor shown in Fig. 1 are designated by the same reference numerals or characters.

As shown in Fig. 4, a stator 221 includes a stator core 224 attached to the inside of the casing 10 by, for example, press fitting or shrink fitting, and coils 223 attached to this stator core 224.

The above-mentioned stator core 224 includes an annular ring-shaped back yoke 224a located so as to be generally orthogonal to the shaft 20, and teeth 224b located upright on the rotor 31 side of this back yoke 224a. The above-mentioned teeth 224b extend axially of the shaft 20 toward the rotor 31 side, and there are a plurality of teeth 224b located around the shaft 20. The coils 223 are wound around the axes of the above-mentioned teeth 224b. The above-mentioned coils 223 are magnetized to generate axial magnetic flux in the teeth 224b.

The above-mentioned teeth 224b and coils 223 each are six in number, so that the stator 221 has four poles. The coils 223 are, for example, three-phase star-connected so that current is supplied from an inverter. Here, the teeth 224b are formed of a dust core and partly buried and fixed in recesses 224c formed in the back yoke 224a that is formed by axially laminating magnetic steel sheets generally orthogonal to the shaft 20. Thus, the teeth 224b protrude independently but are linked through the back yoke 224a. As means for fixing the teeth 224b, press fitting, bonding, or the like is employed.

As shown in Fig. 4, the portions of the teeth 224b which are buried in the recesses 224c in the back yoke 224a should preferably be tapered in shape. Thereby, firstly, magnetic flux passing through the buried portions of the teeth 224b in the back yoke 224a can gradually come out of the back yoke 224a, so that the magnetic flux decreases toward the ends. Secondly, the amount of magnetic flux passing through the inside of a dust core can be reduced to a minimum so that magnetic flux in the back yoke can pass in a plane that is as close to orthogonal as possible to the axial direction. Thirdly, uniform stress is applied when the teeth 224b are inserted into the back yoke 224a, which reduces the occurrence of breakage of the core. Fourthly, such shapes can be used as removal tapers for easy removal from a die at the formation of a dust core. The form of the tapered portions is not necessarily continuous, and the tapered portions may be narrowed stepwise. For reduction in the number of kinds of stamped shapes of the back yoke 224a, it is rather preferable to narrow the teeth stepwise.

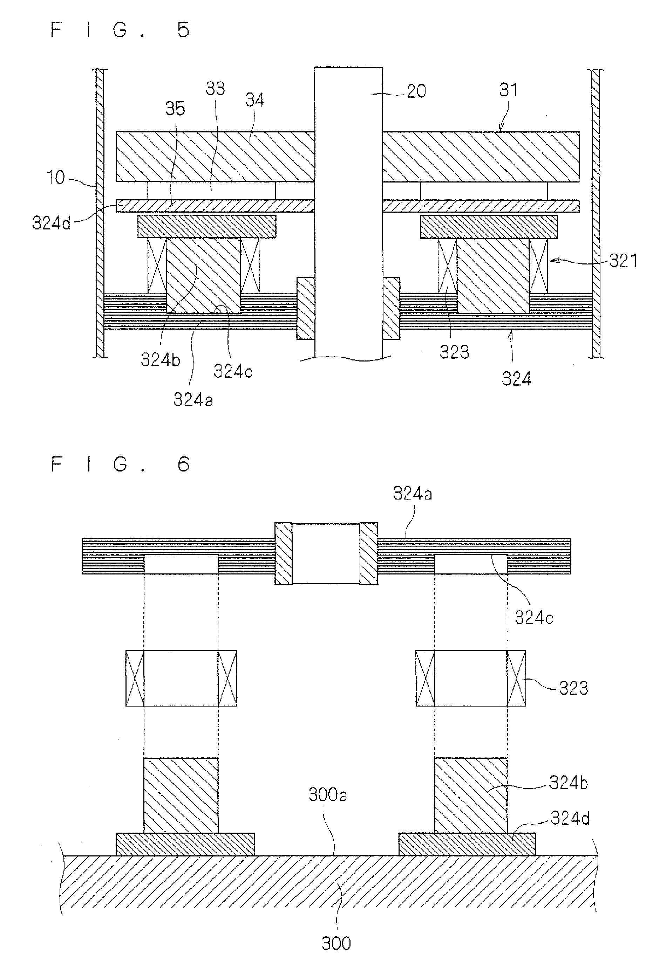

Fig. 5 is a cross-sectional view of a third alternative example of the motor according to the above-mentioned embodiment A1. In Fig. 5, the same components as those of the motor shown in Fig. 1 are designated by the same reference numerals or characters.

As shown in Fig. 5, a stator 321 includes a stator core 324 attached to the inside of the casing 10 by, for example, press fitting or shrink fitting, and coils 323 attached to this stator core 324.

The above-mentioned stator core 324 includes an annular ring-shaped back yoke 324a located so as to be generally orthogonal to the shaft 20, and teeth 324b located upright on the rotor 31 side of this back yoke 324a. The above-mentioned teeth 324b extend axially of the shaft 20 toward the rotor 31 side, and there are a plurality of teeth 324b located around the shaft 20. The coils 323 are wound around the axes of the above-mentioned teeth 324b. The above-mentioned coils 323 are magnetized to generate axial magnetic flux in the teeth 324b.

The above-mentioned teeth 324b and coils 323 each are six in number, so that the stator 321 has four poles. The coils 323 are, for example, three-phase star-connected so that current is supplied from an inverter. Here, the teeth 324b are formed of a dust core and partly buried and fixed in recesses 324c formed in the back yoke 324a that is formed by axially laminating magnetic steel sheets generally orthogonal to the shaft 20. Thus, the teeth 324b protrude independently but are linked through the back yoke 324a. As means for fixing the teeth 324b, press fitting, bonding or the like is employed.

As shown in Fig. 5, the configuration of the stator core should preferably be such that wide portions 324d are provided on the sides of the teeth 324b that face the air gap so as to cover at least part of the coils 313.

Providing the plurality of teeth 324b of the above-mentioned stator core 324 with the wide portions 324c on the sides facing the rotor 31 increases the area that faces the rotor 31, thereby enhancing flux linkage. Also, the above-mentioned wide portions 324c can be effective means for preventing contact between the coils 313 and the rotor 31.

Next, a method of assembly of the stator 324 shown in Fig. 5 in the above-mentioned motor is described.

Fig. 6 is a view for explaining a method of manufacturing the above-mentioned third alternative example of the motor. As show in Fig. 6, the teeth 24b are placed on a jig 300, with the surfaces of the teeth 24b on the sides that face the air gap (the surface of the wide portions 24d) being directed toward a reference plane 300a of the jig 300.

Then, the coils 323 previously wound regularly are located and fitted at the outside of the teeth 324d placed on the jig 300. At this time, insulation between the coils 323 and each of the teeth 324b and the back yoke 324a should be established either on the side of the coils 323 or on the side of the teeth 324b and the back yoke 324a.

Then, with the coils 323 located around the teeth 324b, the back yoke 324a is placed on the teeth 324b from above so that the upper portions of the teeth 324b are buried in the recesses 324c of the back yoke 324a. Then, the back yoke 324a and the teeth 324b are joined together. The upper surface of the jig 300 exhibits a high-precision plane.

The above-mentioned method of manufacturing a motor facilitates the assembly of the stator core 321. As an alternative, even if the back yoke and the plurality of teeth are joined together after coils previously would in a certain shape are located on the back yoke, the stator core can be assembled with ease.

Joining the back yoke 324a and the teeth 324a together with reference to the planes of the above-mentioned teeth 324b on the sides facing the rotor 31 can improve air-gap accuracy.

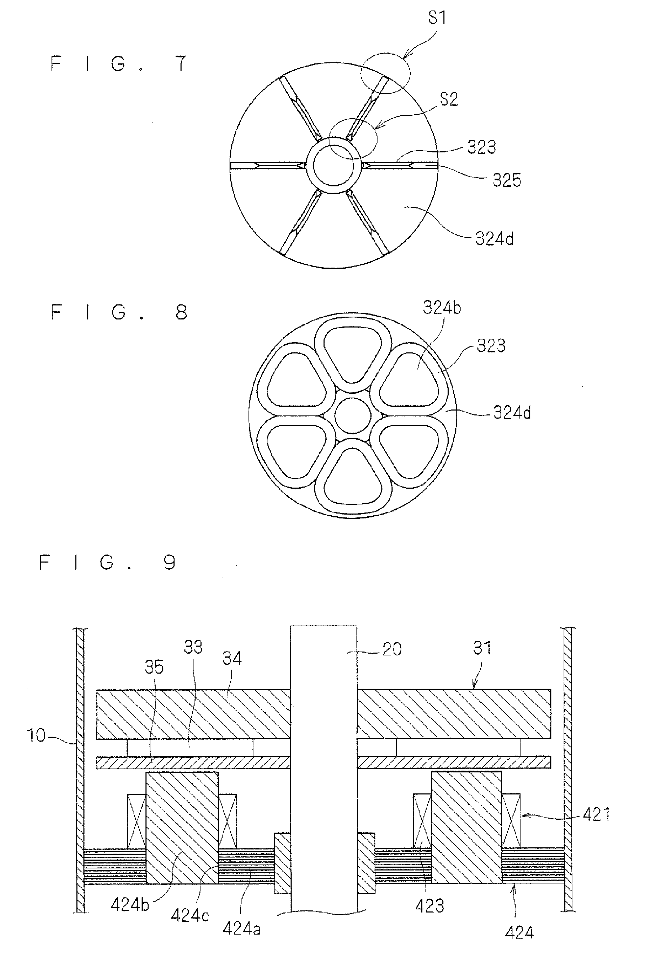

The above-mentioned wide portions 324d, as shown in Figs. 7 and 8, provide certain spaces 325 for magnetic insulation between the teeth 324b, between their adjacent wide portions 324d. These spaces 325 radially extend in the radially outward direction from a center of the wide portions 324d. This configuration allows an increase in the area of the stator core that faces the air gap 41, thereby allowing enhancement of flux linkage. Now, inner peripheral portions (regions S2 in Fig. 7) and outer peripheral portions (regions S1 in Fig. 7) of the adjacent wide portions 324d with respect to the center of rotation, each portion may be in slight contact (or connection), In this case, the relative positions of the teeth 324b can be defined before attachment of the teeth 324b to the back yoke 324a. The areas of the contacts should desirably be as small as possible in order to minimize magnetic flux leakage.

Fig. 9 is a cross-sectional view of a fourth alternative example of the motor according to the above-mentioned embodiment A1. In Fig. 9, the same components as those of the motor shown in Fig. 1 are designated by the same reference numerals or characters. A stator core 421 of the motor shown in Fig. 9 shows the case where teeth 424b penetrate a back yoke 424a.

The above-mentioned stator 421, as shown in Fig. 9, includes a stator core 424 attached to the inside of the casing 10 by, for example, press fitting or shrink fitting, and coils 423 attached to this stator core 424.

The above-mentioned stator core 424 includes the annular ring-shaped back yoke 424a located so as to be generally orthogonal to the shaft 20, and the teeth 424b located upright on the rotor 31 side of this back yoke 424a. The above-mentioned teeth 424b extend axially of the shaft 20 toward the rotor 31 side, and there are a plurality of teeth 424b located around the shaft 20. The coils 423 are wound around the axes of the above-mentioned teeth 424b. The above-mentioned coils 423 are magnetized to generate axial magnetic flux in the teeth 424b.

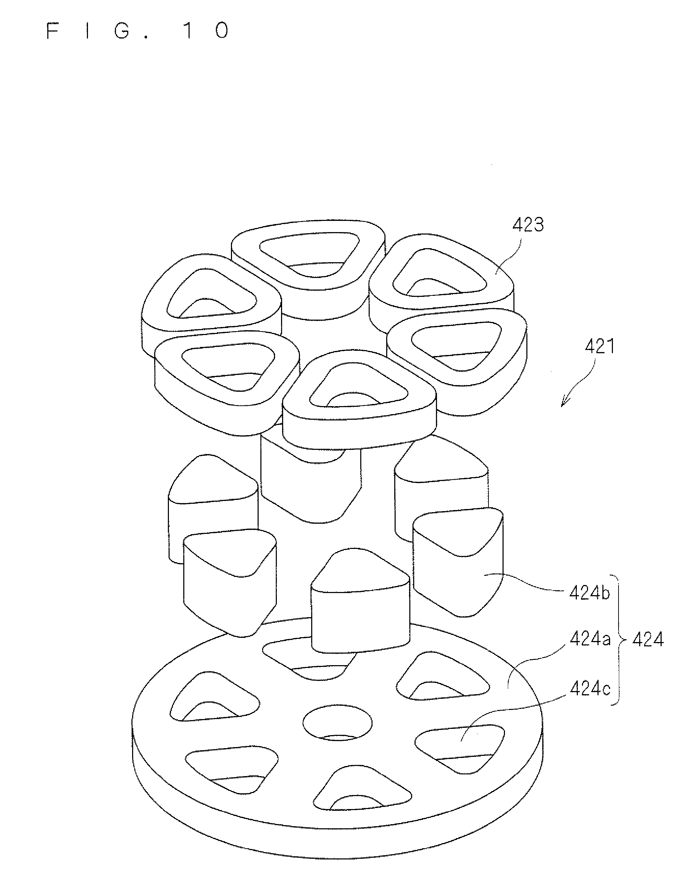

Fig. 10 is an exploded perspective view of the stator in the fourth alternative example of the motor shown in Fig. 9. The above-mentioned teeth 424b and coils 423, as shown in Fig. 10, each are six in number, so that the stator 421 has four poles. The coils 423 are, for example, three-phase star-connected so that current is supplied from an inverter. Here, the teeth 424b are formed of a dust core and partly buried and fixed in through holes 424c formed in the back yoke 424a that is formed by axially laminating magnetic steel sheets that are generally orthogonal to the shaft 20. Thus, the teeth 424b protrude independently but are linked through the back yoke 424a. As means for fixing the teeth 424b, press fitting, bonding, or the like is employed.

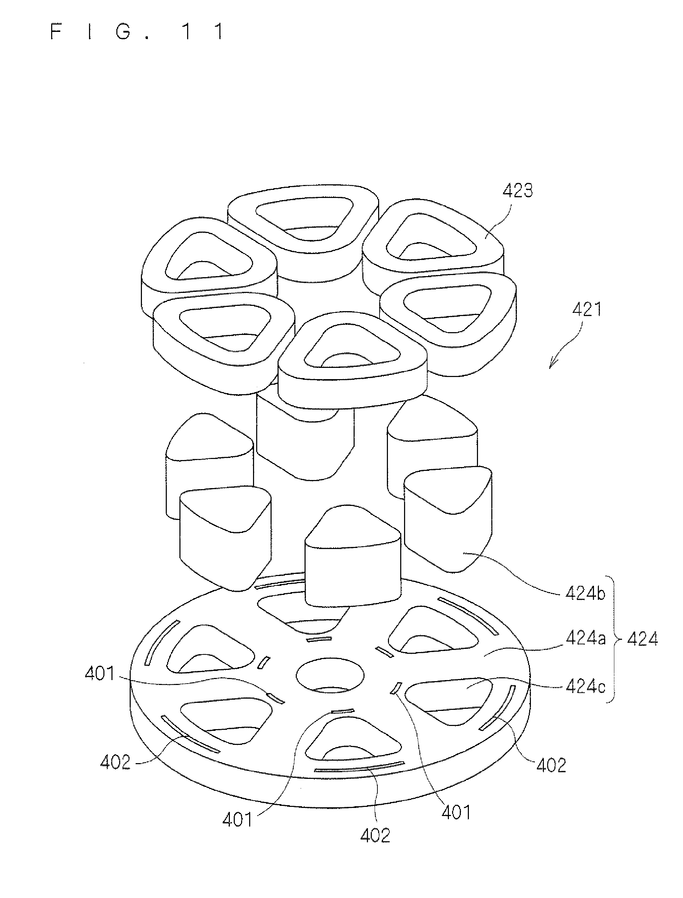

Further, in the stator of the fourth alternative example shown in Figs. 9 and 10, as shown in Fig. 11, stress relaxation holes 401 and 402 may be provided on the inner and outer peripheral sides respectively of the plurality of through holes 422c formed to receive the plurality of teeth 424 in the back yoke 424a. In this case, the stress relaxation holes 401 and 402 formed in the back yoke 424a can relax radial stress acting on the back yoke 424a when the teeth 424b are held by press fitting, shrink fitting, or the like in the back yoke 424a. Further, the stress relaxation holes 402 on the outer peripheral side can relax radial stress acting on the back yoke 424a when the back yoke 424a is held by press fitting, shrink fitting, or the like in the casing 10, thereby maintaining air-gap accuracy without impairing motor characteristics. The stress relaxation holes 401 on the inner peripheral side can, for example, ensure perpendicularity to the shaft when the inner periphery of the back yoke is used as a housing for holding a bearing.

Alternatively, the stress relaxation holes may be provided on only either the inner or outer peripheral side.

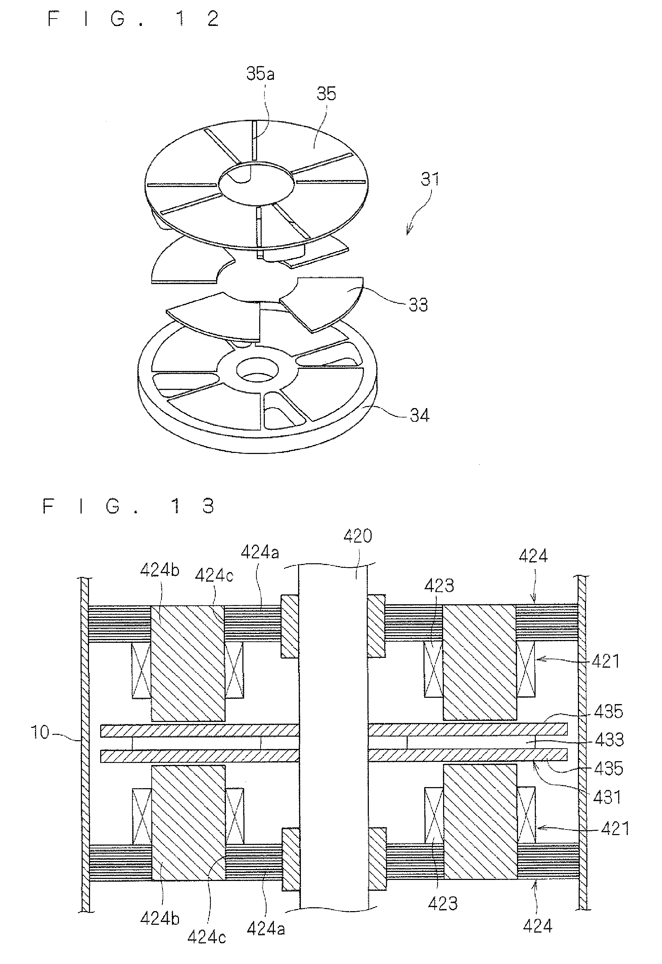

Fig. 12 shows an example of the shape of a rotor of the motor with a stator on one side according to this embodiment A1. Since the above-mentioned motor 31 includes the permanent magnet 33 and thus can increase the magnetic flux density in the air gap 41 (shown in Fig. 1) at the time of motor operation, a high-power and high-efficiency compressor can be achieved. Here, the above-mentioned permanent magnet 33 is not a necessity.

The above-mentioned rotor 31 further includes a rotor plate 35 that sandwiches the permanent magnet 33 with the back yoke 34. This rotor plate 35 is made of a magnetic material and provided with slits 35a for magnetic insulation between adjacent magnetic poles of the permanent magnet 33. These slits 35a extend radially in the radially outward direction from the center of the rotor plate 35. These slits 35a are provided only in the rotor plate 35 and not in the back yoke 34. Since the demagnetizing filed has no direct influence on the above-mentioned permanent magnet 33, the demagnetizing ability increases. Further, when the above-mentioned permanent magnet 33 is a sintered rare-earth magnet or the like, the high-frequency component of the magnetic flux hardly reaches the inside of the permanent magnet 33, which reduces the generation of eddy current inside the permanent magnet 33 and thereby allows loss reduction and a decrease in temperature rise. Here, the above-mentioned rotor plate 35 is not a necessity.

In the motor with the above-mentioned configuration, since a dust core made of pressed magnetic powder having a small eddy-current loss is used for the teeth 24b, 124b, 324b, or 424b; and the back yoke 24a, 124a, 224a, 324a, or 424a formed of a laminated steel sheet having a sufficient strength is held by press fitting or shrink fitting, the motor that can hold the stator core 24, 124, 224, 324, or 424 by press fitting, shrink fitting, or the like can be achieved without impairment of motor characteristics.

Further, by making the portions of the above-mentioned plurality of teeth 124b or 224b which are buried in the back yoke 124a or 224a thinner than the other portions thereof which are not buried in the back yoke 124a or 224a, the positioning at the time of insertion becomes easy, which improves air-gap accuracy.

Still further, since this is an axial gap type motor in which the above-mentioned stator 21, 121, 221, 321, or 421 and rotor 31 face each other in a plane that is generally orthogonal to the shaft 20, it can be downsized by reducing the axial dimension.

Still further, although, due to the use of the rotor 31 with the permanent magnet 33, the magnetic flux generated by the permanent magnet and thus containing a high harmonic content passes through the teeth 24b, 124b, 224b, 324b or 424b, the use of a dust core with a small eddy-current loss for the teeth 24b, 124b, 224b, 324b or 424b allows a further reduction in iron loss.

Still further, since the outer periphery of the back yoke 24a, 124a, 224a, 324a or 424a formed of a laminated steel sheet with a sufficient strength is shrink fitted or press fitted to the inside of the casing 10, the back yoke 24a, 124a, 224a, 324a or 424a can be held in the casing 10 with reliability.

### (Embodiment A2)

Fig. 13 is a cross-sectional view of the outlines of a motor according to embodiment A2.

The motor according to this embodiment A2, as shown in Fig. 13, includes a rotor 431 attached to a shaft 420, and two stators 421 located on both axial sides of the rotor 431. The above-mentioned rotor 431 rotates on the axis of the shaft 420, or a certain rotation axis. These stators 421 each are the stator 421 shown in Fig. 9 according to embodiment A1. The above-mentioned rotor 431 includes two rotor plates 435 and a permanent magnet 433 located between those two rotor plates 435.

While the stators 421 of the motor according to the above-mentioned embodiment A2 are identical in configuration to the fourth alternative example shown in Fig. 9, the presence of the two back yokes 424 located at a certain distance inside the casing 10 have the effect of improving stiffness of the casing 10. Further, in the motor according to this embodiment A2, attractive forces acting on the rotor 431 from the stators 421 on both axial sides can cancel thrust force acting on the rotor 431 and the shaft 420 and can also reduce force acting in the thrust direction on a bearing (not shown) that supports the shaft 20. Still further, using both sides of the permanent magnet 433 for the pair of upper and lower stators 421 minimizes the number of permanent magnets.

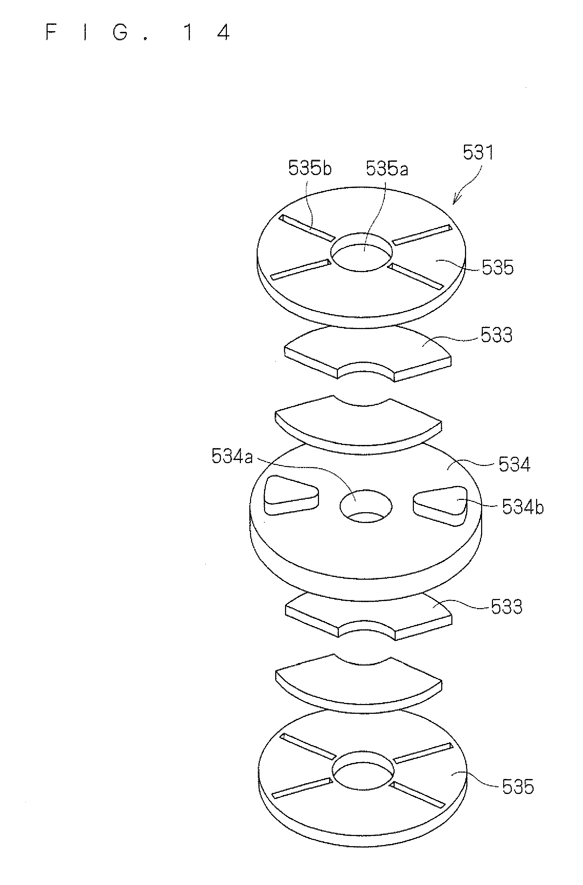

Fig. 14 shows an example of the shape of the rotor of the motor with stators on both sides. This rotor 531, as shown in Fig. 14, includes a generally disk-shaped back yoke 534, permanent magnets 533 located on both sides of the back yoke 534, and rotor plates 535.

As shown in Fig. 14, the rotor 531 exhibits poles on both sides, that is, this rotor 531 has two poles in this example. The back yoke 534 is not a necessity, and if the back yoke 534 is omitted, then only the permanent magnet 533 on either the upper or lower side is necessary.

This rotor 531, as shown in Fig. 14, has two sector-shaped permanent magnets 533 arranged along the circumference on one axial side of the disk-shaped back yoke 534 made of a magnetic material with a central hole 534a, and has another two sector-shaped permanent magnets 533 arranged along the circumference on the other axial side of the back yoke 534. The permanent magnets 533 on both sides of the above-mentioned back yoke 534 are located to face each other. On both sides of the above-mentioned back yoke 534, magnetic substances 534b are provided in regions sandwiched between the two permanent magnets 533 circumferentially arranged. The disk-shaped rotor plates 535 with central holes 535a are located to sandwich the back yoke 534, on which the above-mentioned permanent magnets 533 are arranged, from both axial sides of the back yoke 534, so that the back yoke 534, the permanent magnets 533, and the rotor plate 535 are overlaid one another. The above-mentioned rotor plates 535 each have four radially extending slits 535b between which the permanent magnets 533 and the magnetic substances 534b are alternately located.

The configuration of the above-mentioned rotor 531 facilitates the fixing of the permanent magnets 533 as well as facilitates the holding of the rotor 531 to the rotary shaft. It is also possible to obtain the skew effect by shifting pole distributions on both sides of the rotor 531. While the poles of the permanent magnets 53 on both axial sides of the back yoke 534 may be either the same or opposite, the locations of the coils in the stator vary depending on whether the poles are the same or opposite. When the poles on both sides are the same, the thickness of the back yoke 534 is important, while on the other hand, when the poles on both sides are opposite, the back yoke 534 only needs to axially pass the magnetic flux. Further, since, in the above-mentioned rotor 531, the magnets acting on the upper stator and the magnets acting on the lower stator are independent of one another, means for generating axial forces may be such means that change the magnet thickness, the pole area, the maximum energy product, or the like. In this case, it is more effective that the permanent magnets on both sides have the same poles, but the permanent magnets on both sides may have opposite poles.

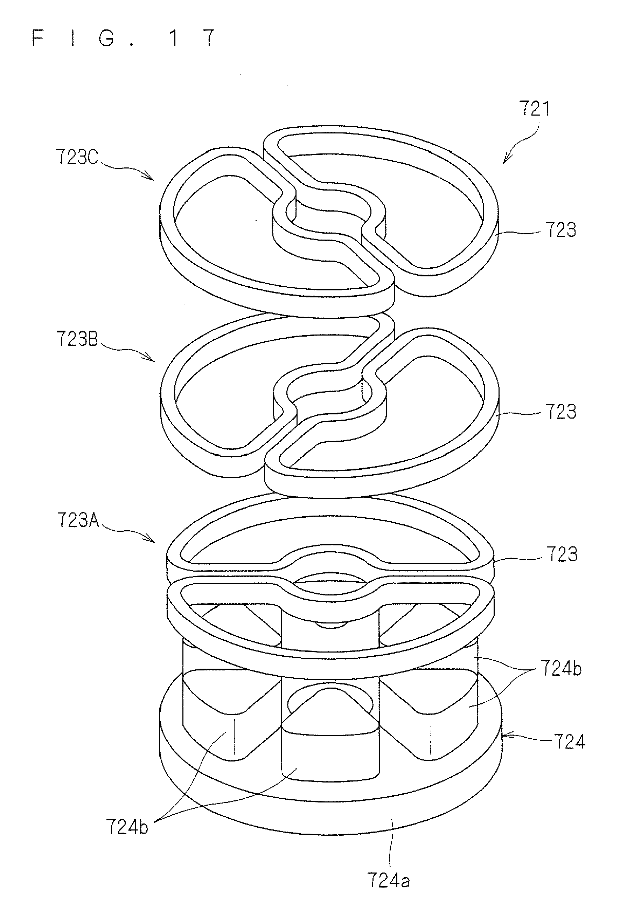

Fig. 17 shows an example of a distributed winding stator for use in the motors according to the above-mentioned embodiments A1 and A2, and this stator exhibits two poles.

Locating the stator 421 to sandwich the above-mentioned rotor 431 from both axial sides enhances flux linkage and improves output.

As shown in Fig. 17, the above-mentioned stator core 724 includes an annular ring-shaped back yoke 724a located so as to be generally orthogonal to the shaft; and first to sixth teeth 724b that extend from this back yoke 724a along the axis of a stator 721 and that are circumferentially arranged. The above-mentioned teeth 724b are provided with a lower coil group 723A, a middle coil group 724B, and an upper coil group 724C which are located from bottom to top in this order along the axis of the stator 721. The materials of the back yoke 724a and the teeth 724b and their combinations are as described in embodiment A1.

The above-mentioned lower coil group 723A includes a coil 723 wound collectively around the first, second and third teeth 724b, and another coil 723 wound collectively around the fourth, fifth, and sixth teeth 724b. The above-mentioned middle coil group 23B includes a coil 723 wound collectively around the second, third and fourth teeth 724b, and another coil 723 wound collectively around the fifth, sixth and first teeth 724b. The above-mentioned upper coil group 23C includes a coil 723 wound collectively around the third, fourth and fifth teeth 724b, and another coil 723 wound collectively around the sixth, first and second teeth 724b.

By forming three-phase windings in which the above-mentioned lower coil group 23A is the U phase, the middle coil group 23B is the V phase, and the upper coil group 23C is the W phase (the phases are interchangeable), three-phase current rectified to a certain current or voltage and to a certain frequency is supplied to each of the groups.

This distributed winding stator 721 produces high flux linkage, and its plurality of phases cooperate with each other to generate magnetic flux. This results in smooth variations in magnetic flux and thereby allows low vibration and noise reduction.

In the motors according to these embodiment A1 and A2, the pattern of winding is not limited to concentrated winding, distributed winding, wave winding, or the like, and there is freedom of choice. Further, the combination and ratio of the number of stator teeth and the number of rotor poles are arbitrary.

### (Embodiment A3)

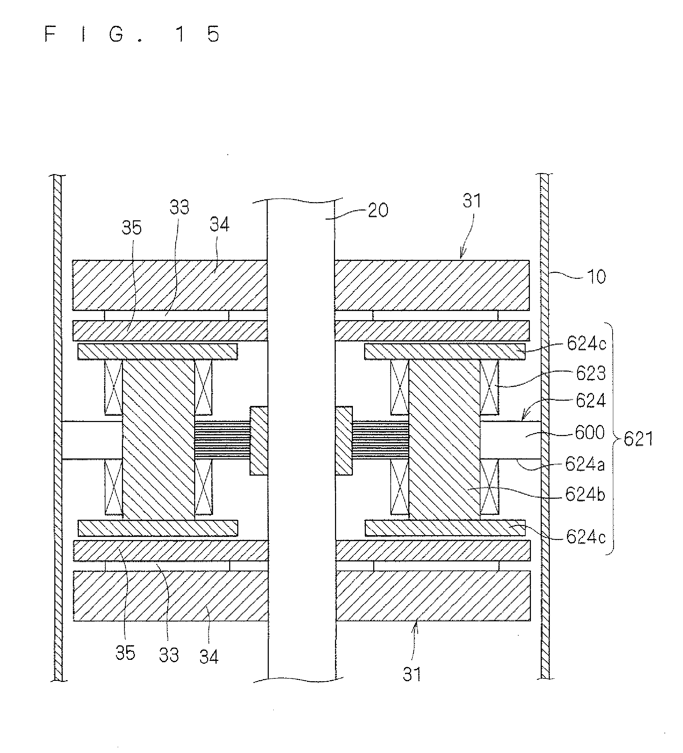

Fig. 15 is a cross-sectional view of the outlines of a motor according to embodiment A3. The motor according to this embodiment A3, as shown in Fig. 15, includes the rotors 31 on both sides of a stator 621. In Fig. 15, wide end portions of the teeth 624b improve air-gap permeance.

As shown in Fig. 15, the plurality of teeth 624b of a stator core 624 have wide portions 624c provided on the sides facing the rotors 31, which increases the area that faces the rotors 31 and thereby enhances flux linkage. Further, attractive forces acting from the above-mentioned stator 621 on the rotors 31 on both axial sides can cancel thrust force acting on the rotors 31 and the shaft 20 and can also reduce force acting in the thrust direction on a bearing that supports the shaft 20.

At this time, the presence of the wide portions 624c at both the ends of the teeth 624b hinders the teeth 624b from being axially inserted into a back yoke 624a.

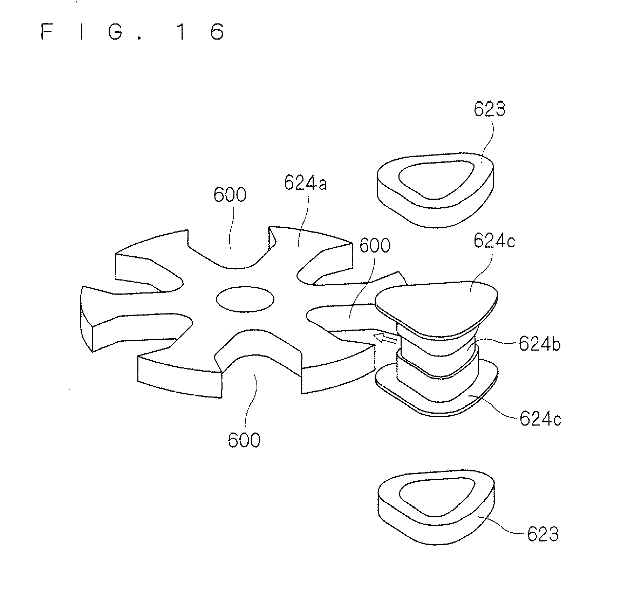

Thus, as shown in Fig. 16, the back yoke 624a have notches 600 formed on the radially outer side of the teeth 624b in the back yoke 624a within the range of the maximum circumferential width of the portions of the teeth 624b which are buried in the back yoke 624a. These notches 600 allow the teeth 624b to be inserted into the back yoke 624a from outside. At this time, it is preferable, in order to determine axial positioning, to make the portions of the teeth 624b which are buried in the back yoke 624a thinner than the other portions thereof which are wound with coils. Since coils 623 cannot be axially inserted onto the teeth 624b, they are directly wound around the teeth 624b using a winder (not shown). This embodiment A3 is applicable for concentrated windings. In Fig. 16, for the sake of convenience, only one set of tooth 624b and coils 623 are shown and other teeth and coils are omitted.

Further, providing the back yoke 624a of the above-mentioned stator core 624 with the notches 600 formed on the radially outer side of the region where the plurality of teeth 624b are located allows the teeth 624b to be inserted into the back yoke 624 radially from outside at the time of assembly, thereby facilitating the assembly. This configuration is also applicable to the form in which a stator faces a rotor only on one side through an air gap.

### (Embodiment A4)

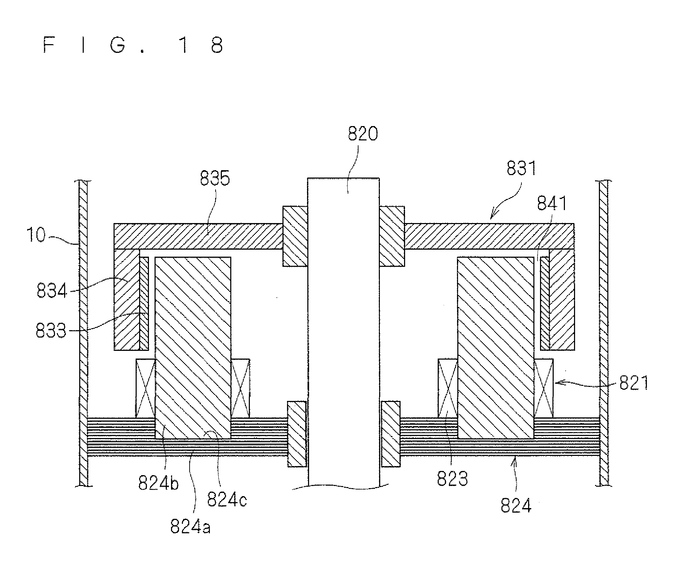

Fig. 18 is a cross-sectional view of the outlines of a motor according to embodiment A4. The motor according to this embodiment A4 differs from the motor according to embodiment A1 in that it is not an axial gap type.

The motor according to this embodiment A4, as shown in Fig. 18, includes a stator 821, a rotor 831 located above this stator 821, and a shaft 820 that is fixed to this rotor 831 and transmits a torque of this rotor 381 to a load and that extends out of this rotor 831 to be rotatably supported by a bearing (not shown). The above-mentioned rotor 831 rotates on the axis of the shaft 820, or a certain rotation axis.

The above-mentioned stator 821 includes a stator core 824 attached to the inside of the casing 10 by, for example, press fitting or shrink fitting, and coils 823 attached to this stator core 824.

The above-mentioned stator core 824 includes an annular ring-shaped back yoke 824a located so as to be generally orthogonal to the shaft 820, and teeth 824b located upright on the rotor 831 side of this back yoke 824a.

The teeth 824b of the above-mentioned stator core 824 extend axially of the shaft 820 toward the rotor 831 side, and there are a plurality of teeth 824b located around the shaft 820. The coils 823 are wound around the axes of the above-mentioned teeth 824b in the vicinity of the back yoke 824a. The above-mentioned coils 823 are magnetized to generate axial magnetic flux in the teeth 824b.

The above-mentioned rotor 831 includes a disk-shaped rotor supporting member 835 attached to the shaft 820, a cylindrical-shaped back yoke 824 with its one end fixed to the outer periphery of the rotor supporting member 825, and a plurality of permanent magnets 833 located on the inner periphery of the above-mentioned back yoke 824. The above-mentioned rotor 831 is fixed to the shaft 820 and rotatably held by a bearing that is provided on the inside diameter of the back yoke 824a of the stator 821, or by a bearing that is provided on the casing 10 side without contact with the back yoke 824a of the stator 821.

The motor according to this embodiment A4 configures an outer rotor type motor, in which the cylindrical-shaped back yoke 824 is located to cover upper portions of the teeth 824b of the stator 821. An air gap 841 is provided between the inner peripheral surfaces of the permanent magnets 833 on the inner side of the above-mentioned back yoke 824 and the outer peripheral surfaces of the teeth 824b.

The teeth 824b are formed of a dust core and partly buried and fixed in recesses 824c formed in the back yoke 824a that is formed by axially laminating magnetic steel sheets. Thus, the teeth 824b protrude independently but are linked through the back yoke 824a. As means for fixing the teeth 824b, press fitting, bonding or the like is employed. Magnetic flux generated by the permanent magnets 833 flows through the air gap, and flows radially inwardly of the teeth 824b from the radial outer peripheries of the teeth 824b and axially downward to the plane of the drawing, and then flows in the back yoke 824a circumferentially toward adjacent teeth 824b. Accordingly, it is quite preferable for the teeth 824b to be formed of a dust core with the same magnetic properties in any direction.

It is also desirable that the depths of the recesses 824c in the back yoke 824a be within the range that the magnetic flux has the axial component. For example, when the magnetic flux density of the back yoke 824a is approximately close to the saturation region, it is desirable that the depths of the recesses 824c be approximately equivalent to the thickness of the back yoke 824a, or that the teeth 824b penetrate the back yoke 824a.

Further, any of the first to fourth alternative examples according to embodiment A1 can be applied to this embodiment A4.

Still further, in the above-mentioned embodiment A4, the configuration may be such that the rotor supporting member 835 further includes a permanent magnet on the inner side (on the stator side) so as to generate more torque (i.e., the configuration may include a combination of the outer rotor and the axial rotor).

### (Embodiment A5)

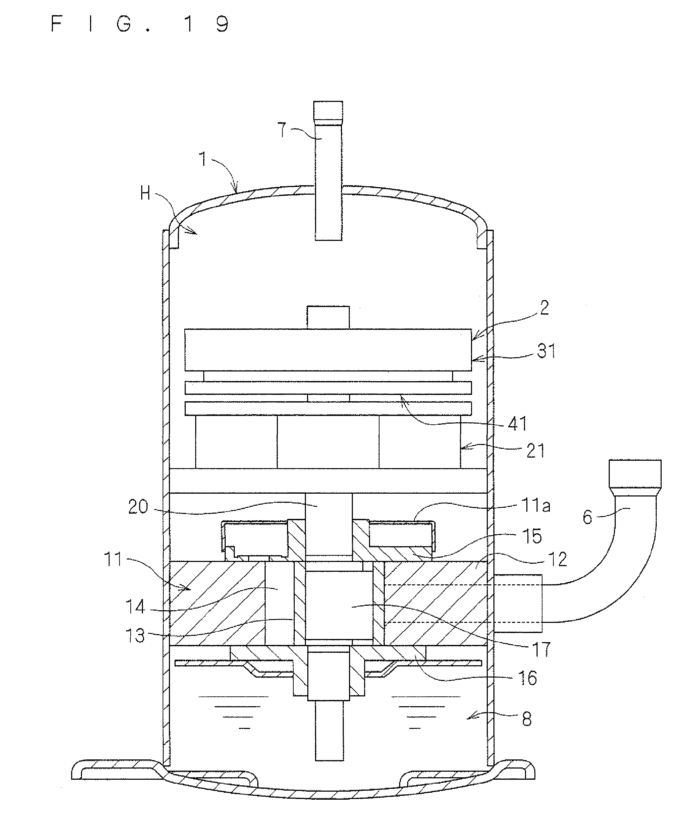

Fig. 19 is a longitudinal cross-sectional view of a closed compressor according to embodiment A5. The compressor according to this embodiment A5 employs the motor according to embodiment A1.

This compressor, as shown in Fig. 19, includes a motor 2 located within a closed container 1 which is one example of a casing, and a compression part 11 located within the closed container 1 and under the motor 2 and driven by the motor 2. Here, the upward and downward directions refer to a direction along a central axis of the closed container 1 irrespective of whether or not the central axis of the closed container 1 is inclined with respect to a horizontal plane.

The above-mentioned motor 2 is located in a region of the closed container 1 which is filled with a high-pressure refrigerant discharged from the compression part 11. More specifically, within the closed container 1 is a high-pressure area H, and this compressor is a so-called high-pressure dome type compressor.

The above-mentioned motor 2 includes the stator 21, the rotor 31 located above this stator 21 with the air gap 41 therebetween, and the shaft 20 that is fixed to this rotor 31 and transmits a torque of this rotor 31 to the compression part 11 and that extends out of this rotor 31 to be rotatably held by a bearing.

The above-mentioned compression part 11 includes a cylindrical main body 12, and a top plate 15 and a bottom plate 16 which are attached respectively to upper and lower open ends of this main body 12. The above-mentioned shaft 20 penetrates the top plate 15 and the bottom plate 16 to enter the inside of the main body 12.

Inside the above-mentioned main body 12, a roller 13 that is fitted into a crank pin 17 provided on the shaft 20 is revolvably located, and revolutions of this roller 13 produce compression effects. In other words, a compression chamber 14 is formed between the outer face of the roller 13 and the inner face of the main body 12.

The above-mentioned closed container 1 includes a suction pipe 6 that opens into the compression chamber 14 on the low-pressure side of the compression part 11, and a discharge pipe 7 that opens to the upper side (downstream side) of the motor 2. The above-mentioned compression part 11 includes a discharge hole 11 a that opens to the motor 2 side.

The above-mentioned shaft 20 has its one end rotatably supported by the bottom plate 16 of the compression part 11 and its other end rotatably supported by the stator 21.

The above-mentioned closed container 1 contains, on the lower side, lubricating oil 8 in which the lower portion of the shaft 20 is immersed. This lubricating oil 8 runs up the inside of the shaft 20 with the rotation of the shaft 20 to lubricate a slider or the like of the compression part 11.

Next, the effect of the above-mentioned compressor is described.

A refrigerant is supplied from the above-mentioned suction pipe 6 to the compression chamber 14 in the compression part 11. and then, the compression part 11 is driven by the motor 2 to compress the refrigerant. The compressed refrigerant along with the lubricating oil is discharged from the discharge hole 11a of the compression part 11 into the closed container 1, transmitted through the motor 2 to the high-pressure area H, and then discharged to the outside of the closed container 1 from the discharge pipe 7.

At this time, a refrigerant path (not shown) needs to be formed inside the back yoke of the stator 21. Its position and shape are arbitrary.

The compressor according to this embodiment A5 can install axial gap type motors which are difficult to install for relatively high-power applications. Thus, a scaled-down and high-efficiency (resulting from a reduction in iron loss) compressor can be achieved.

While the above-mentioned embodiment A5 has described a rotary compressor using an axial gap type motor, the invention may be applied not only to rotary compressors but also to other compressors such as scroll compressors.

Also, while, in the above-mentioned embodiment A5, the motor 2 drives the compression part 11 as a driven part, the driven part driven by the motor according to the invention is not limited to the compression part but may be any other driven part with other configurations such as being driven by rotation of the main shaft of a motor.

Further, for rotary compressors, a compression chamber may be configured by a rotor and a cylinder in which the rotor itself is provided with a movable piston and the cylinder is brought into intimate contact with the rotor on the side opposite to the air gap. In this case, no shaft is necessary between the rotor and a compression mechanism. As another alternative, if a fixed axle extends from a stator toward a rotor and a bearing is provided between the fixed axle and the rotor, no shaft to rotate with the rotor is necessary and it becomes possible to prevent vibrations due to torsion between the rotor and a compression mechanism. Accordingly, in the above cases, a shaft is not a necessity.

### (Embodiment B1)

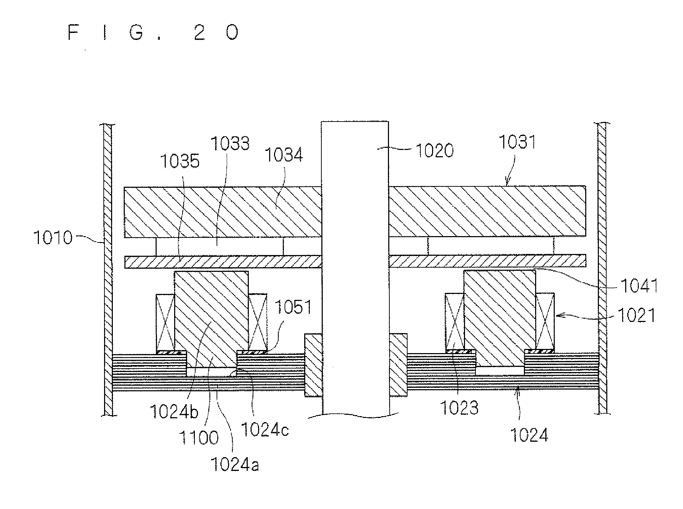

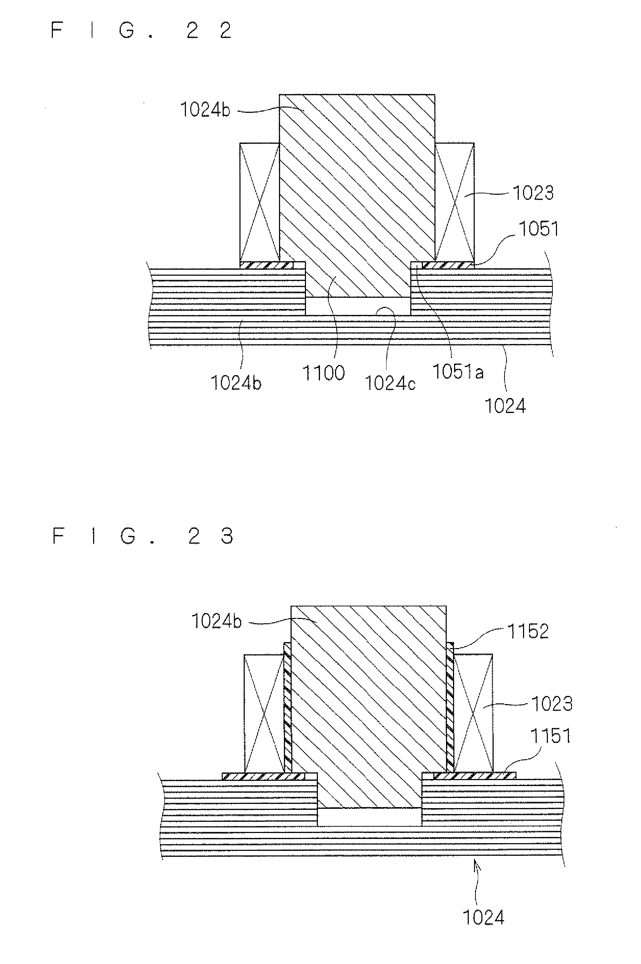

Fig. 20 is a cross-sectional view of the outlines of a motor according to embodiment B1, and Fig. 22 is an large view around a teeth portion.

The motor according to this embodiment B1, as shown in Fig. 20, includes a stator 1021, a rotor 1031 located above this stator 1021 with an air gap 1041 therebetween, and a shaft 1020 that is fixed to this rotor 1031 and transmits a torque of this rotor 1031 to a load and that extends out of this rotor 1031 to be rotatably supported by a bearing (not shown). The above-mentioned rotor 1031 rotates on the axis of the shaft 1020, or a certain rotation axis.

The above-mentioned stator 1021 includes a stator core 1024 attached to the inside of a casing 1010 by, for example, press fitting or shrink fitting, and coils 1023 attached to this stator core 1024.

The above-mentioned stator core 1024 includes an annular ring-shaped back yoke 1024a located so as to be generally orthogonal to the shaft 1020, and teeth 1024b located upright on the rotor 1031 side of this back yoke 1024a.

The teeth 1024b of the above-mentioned stator core 1024 extend axially of the shaft 1020 toward the rotor 1031 side, and there are a plurality of teeth 1024b located around the shaft 1020. The coils 1023 are wound around the axes of the above-mentioned teeth 1024b. The above-mentioned coils 1023 are magnetized to generate axial magnetic flux in the teeth 1024b. The above-mentioned coils 1023 have so-called a "concentrated winding" around the stator core 1024. This "concentrated winding" is a pattern of winding that allows easy winding and a reduction in the amount of copper.

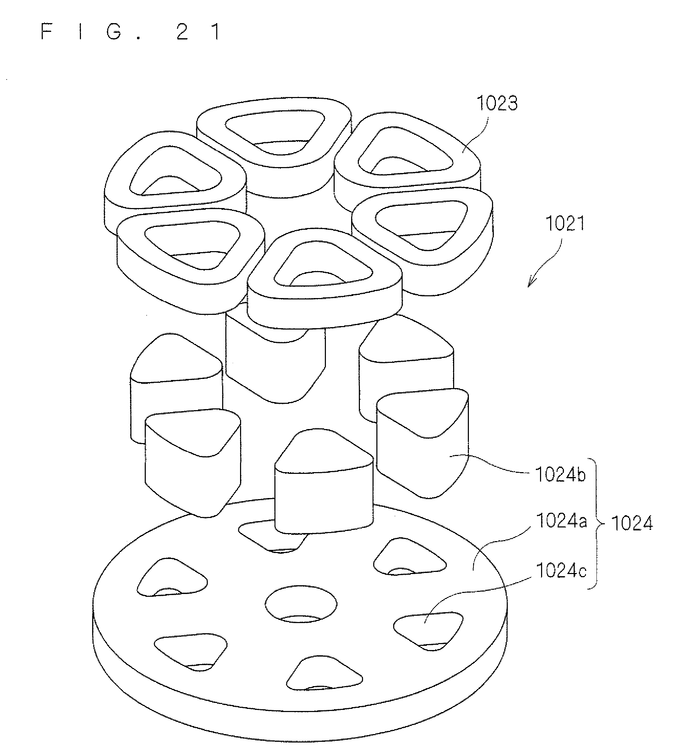

The above-mentioned teeth 1024b and coils 1023 each are six in number as shown in Fig. 21, so that the stator 1021 has four poles. That is, this stator 1021 is considered as being equivalent to having a 4-pole 6-slot concentrated winding structure. The coils 1023 are, for example, circumferentially arranged in the order of U-phase, V-phase, W-phase, U-phase, V-phase and W-phase, and each three phases are star-connected so that current is supplied from an inverter. The teeth 1024b are formed of a dust core and partly buried (buried portions 1100) and fixed in recesses 1024c formed in the back yoke 1024a that is formed by axially laminating magnetic steel sheets that are generally orthogonal to the shaft 1020. Thus, the teeth 1024b protrude independently but are linked through the back yoke 1024a. As means for fixing the teeth 1024b, press fitting, bonding, or the like is employed. Examples of dust cores include iron-dust cores. Magnetic steel sheets are so-called silicon steel sheets, but they may be thin plates of amorphous, permalloy, or the like. The selection is made according to the required properties. The back yoke is not necessarily made of laminated thin plates. However, the utility of the configuration according to the invention is especially accentuated in back yokes of laminated thin plates which have difficulty in providing a radius (rounded portion) on each edge of holes that receive teeth.

It is desirable that the depths of the recesses 124c in the back yoke 104a be within the range that magnetic flux has the axial component. For example, when the magnetic flux density of the back yoke 104a is approximately close to the saturation region, it is desirable that the depths of the recesses 1024c be approximately equivalent to the thickness of the back yoke 1024a, or that the teeth 1024b penetrate the back yoke 1024a. In general, the depths of the recesses 1024c need to be not less than half of the thickness of the back yoke 1024a. By so doing, magnetic flux passes into the back yoke 1024a of a laminated steel sheet after it has passed and reached a sufficient depth through a dust core, which results in low magnetic reluctance and small iron loss. The magnetic flux passing through the back yoke 1024a can be divided into two flows: the one flowing into each of the teeth 1024b; and the one flowing through each of the teeth 1024b and then into adjacent teeth 1024b. The latter passes through the back yoke 1024a formed of a laminated steel sheet. Further, as to clearance between the buried portions of the teeth and the back yoke at the insertion of the teeth into the back yoke, forming such axial clearance as to absorb errors or as to allow the insertion of an adhesive therein can improve air-gap accuracy. Still further, the side faces of the teeth should desirably be in press-fitted relation with the back yoke.

As shown in Fig. 20, the above-mentioned rotor 101 includes an annular ring-shaped back yoke 104 attached to the shaft 1020, and a permanent magnet 1033 provided on one face of this back yoke 1034 on the stator 1021 side. The inside diameter of the back yoke 1024a of the above-mentioned stator core 1024 may be so great as not to be in contact with the shaft 1020, or as shown in Fig. 20, a bearing may be provided on the inside diameter of the back yoke 1024a.

The back yoke 134 of the above-mentioned rotor 1031 is made of a magnetic material. The above-mentioned permanent magnet 1033 has alternately different magnetic poles arranged circumferentially of the shaft 1020 and generates magnetic flux in a direction along the shaft 1020.

As shown in Fig. 22, the buried portions 1100 of the teeth 1024b which are buried in the back yoke 1024a are thinner than the other portions thereof, by which the positioning at the time of insertion is determined. This improves air-gap accuracy.

Here, the depth to which the teeth 1024b are buried in the back yoke 1024a is slightly smaller than the lengths of the thin portions of the teeth 1024b. This is because a first insulating material 1051 for insulating the back yoke 1024a and the coils 1023 is inserted into this part. In other words, the teeth 1024b are buried leaving space for the thickness of the first insulating material 1051. Here, the first insulating material 1051 is insulating film with a hole 1051 a having a shape that is larger than the cross section of the portions of the plurality of teeth 1024b which are buried in the back yoke 1024a and that is smaller than the cross section of the other portions thereof which are not buried in the back yoke 1024a. While, in Fig. 22, the first insulating material 1051 is provided independently for each of the teeth 1024b, it may be an integral film for all the teeth.

For reasons of die or machining, it is difficult for stepped portions of the above-mentioned teeth 1024b between the portions buried in the back yoke 1024a and the other portions to have corners with no radius. Especially, since the teeth 1024b and the back yoke 1024a have no more clearance therebetween than permitting their press-fitted relation, any small radius can affect the burial depth and deteriorate air-gap accuracy. Thus, clearance formed by the holes of the insulating film, which is the first insulating material 1051, is used to absorb the radii of the teeth 1024b. The thickness of this insulating film allows the definition of clearance between the back yoke and the coils, thereby further improving air-gap accuracy. Although insulation between the teeth and the coils are necessary, the form of the insulation is arbitrary and thus not shown here. Concrete examples of insulation between the teeth and the coils is given in the following description.

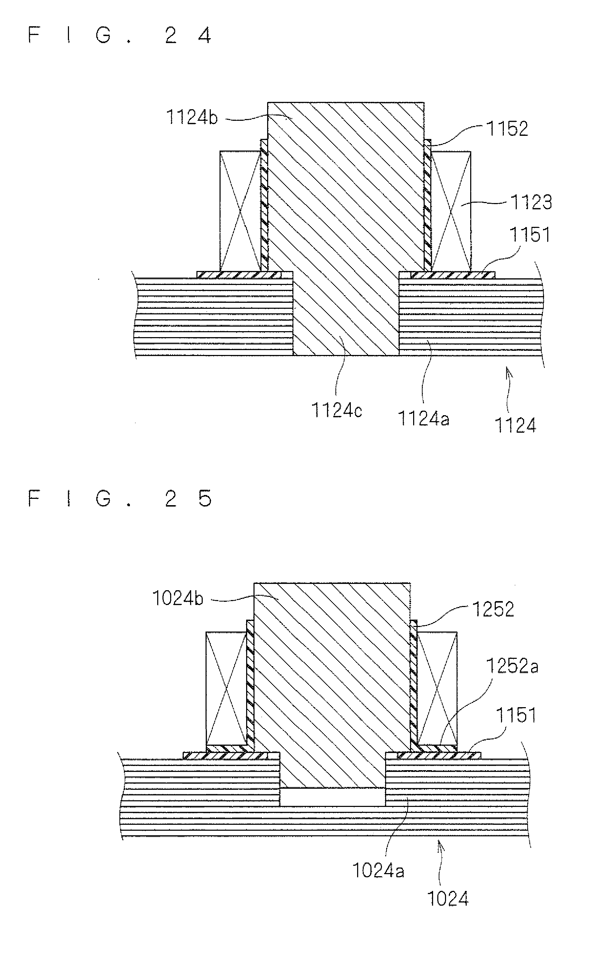

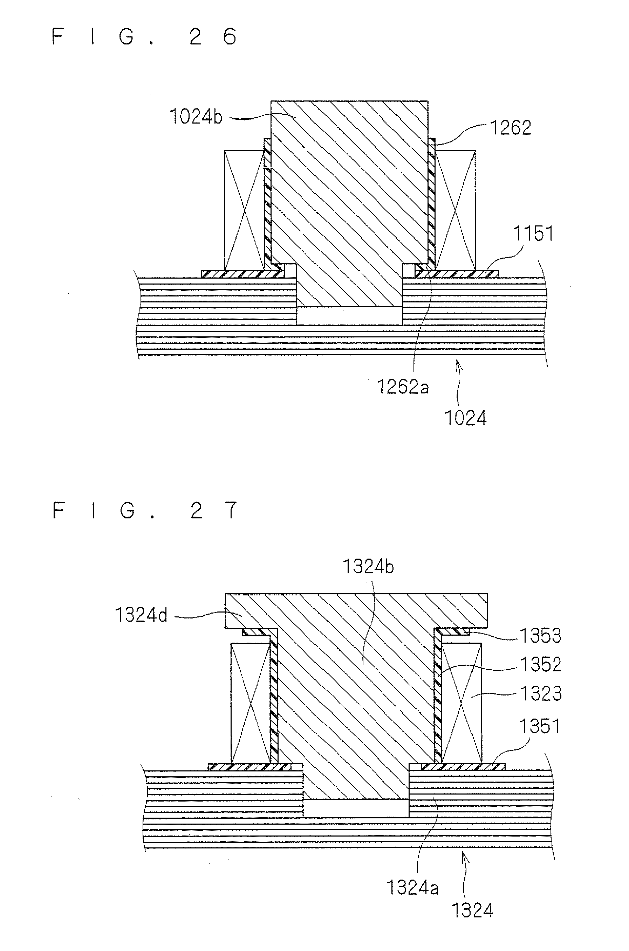

Fig. 23 is a cross-sectional view showing a first alternative example of the motor according to the above-mentioned embodiment B1; Fig. 24 is a cross-sectional view showing a second alternative example of the above-mentioned motor; Fig. 25 is a cross-sectional view showing a third alternative example of the above-mentioned motor; Fig. 26 is a cross-sectional view showing a fourth alternative example of the above-mentioned motor; and Fig. 27 is a cross-sectional view showing a fifth alternative example of the above-mentioned motor.

As shown in Fig. 23, a first insulating material 1151 is provided for insulation between the back yoke 1024a and the coils 1023, and a second insulating material 1152 is provided for insulation between the teeth 1024b and the coils 1023. The above-mentioned second insulating material 1152 shall be insulating film that is wound around the other portions of the plurality of teeth 1024b which are not buried in the back yoke 1024a. This insulating film allows easy establishment of insulation between the teeth 1024b and the coils 1023.

As in the second alternative example of Fig. 24, teeth 1124b may penetrate a back yoke 1124a. At this time, holes 1124c formed in the back yoke 1124a are through holes.

Further, as in the third alternative example of Fig. 25, a second insulating material 1252 may have a bend 1252a that is bent outwardly of the clearance between the back yoke 1024a and the teeth 1024b so as to overlap with a first insulating material 1251 and, if necessary, to be bonded or welded thereto.

Further, as in the fourth alternative example of Fig. 26, a second insulating material 1262 may have a bend 1262a that is bent inwardly of the clearance between the back yoke 1024a and the teeth 1024b so as to overlap with the first insulating material 1151 and, if necessary, to be bonded or welded thereto.

The second insulating material and the first insulating material may be made integrally of a resin molded material. This reduces the number of parts and facilitates assembly.

As shown in Fig. 20, clearance is provided between the ends of the portions of the plurality of teeth 1024b which are buried in the recesses 1024c in the back yoke 1024a and the back yoke 1024a so as to avoid axial contact between the teeth 1024b and the back yoke 1024a within the recesses 1024c. This can prevent an axial flow of magnetic flux within the back yoke 1024a, thereby effectively suppressing an increase in iron loss. When the back yoke 1024a is used in the magnetic saturation region, the clearance should preferably be as small as possible so that a magnetic adhesive may be filled therein. Although magnetic adhesives have considerably lower magnetic permeability than magnetic steel sheets or dust cores, they have higher magnetic permeability than air and thus have the effect of reducing magnetic saturation. However, except at the bottoms, the recesses have no clearance between the teeth 1024b and the back yoke 1024a.

Further, as in the fifth alternative example of Fig. 27, a plurality of teeth 1324b of the stator core 1324 may have wide portions 1324d formed on the sides facing the rotor 1031 (shown in Fig. 20), in which case the establishment of insulation (a third insulating material 1353) between the wide portions 1324d and the coils 1323 also becomes necessary.

At this time, the above-mentioned second insulating film 1352 is a second resin molded material that covers the periphery of the other portions of the plurality of teeth 1324b which are not buried in a back yoke 1324a, and it should be formed integral with a third resin molded material that is the third insulating material 1353 for insulating the coils 1323 and the wide portions 1324d. This reduces the number of parts and facilitates assembly.

Providing the plurality of teeth 1324b of the above-mentioned stator core 1324 with the wide portions 1324d on the sides facing the rotor 1031 increases the area that faces the rotor 1031, thereby enhancing flux linkage. Also, the above-mentioned wide portions 1324d can be effective means for preventing contact between the coils 1323 and the rotor 1031 (shown in Fig. 20). The wide portions and the teeth portion should preferably be formed of a dust core as a unit. Further, the second insulating material and the third insulating material may be integrally formed of a resin molded material. Still further, the first insulating material, the second insulating material, and the third insulating material may be integrally formed of a resin molded material, in which case, however, a die is complicated to some extent.

Next, a method of assembly of the stator core 1324 in the fifth alternative example of the above-mentioned motor shown in Fig. 27 is described.

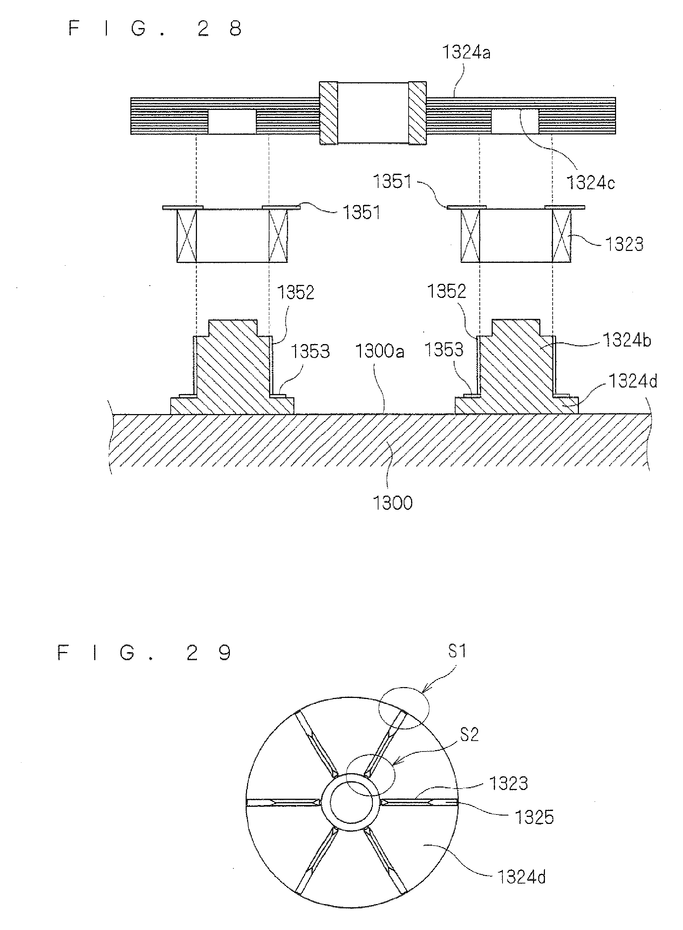

Fig. 28 is a view for explaining a method of manufacturing the above-mentioned fifth alternative example of the motor. As show in Fig. 28, the teeth 1324b are placed on a jig 1300, with the faces of the teeth 24b on the sides (the wide portions 1324d) that face the air gap being directed toward a reference plane 1300a of the jig 1300. These teeth 1324b are provided with the second insulating material 1352 and the third insulating material 1353.

Then, the coils 1323 previously wound regularly are located and fitted at the outside of the teeth 1324b placed on the jig 1300. At this time, insulation between the coils 1323 and the teeth 1324b and between the coils 1323 and the back yoke 1324a is established by the second insulating material 1352. Further, a first insulating material 1351 is provided for insulation between the teeth 1324b and the back yoke 1324a.

Then, with the coils 1323 located around the teeth 1324b, the back yoke 1324a is placed on the teeth 1324b from above so that the upper portions of the teeth 1324b are buried in recesses 1324c formed in the back yoke 1324a. Then, the back yoke 1324a and the teeth 1324b are joined together. The upper surface of the jig 1300 exhibits a high-precision plane.

At this time, the positions where to bury the teeth are determined by the steps formed on the teeth 1324b and the first insulating material 1351, but in practice, they should be determined by a jig for use in burying the teeth into the back yoke. Some errors in the accuracy of machining parts will be absorbed by the first insulating material of resin.

The above-mentioned method of manufacturing a motor facilitates the assembly of the stator core 1321. As an alternative, even if the back yoke and the plurality of teeth are joined together after coils previously would in a certain shape are placed on the back yoke, the stator core can be assembled with ease.

Joining the back yoke 1324a and the teeth 1324a together with reference to the planes of the above-mentioned teeth 1324b on the sides facing the rotor 1031 can improve air-gap accuracy.

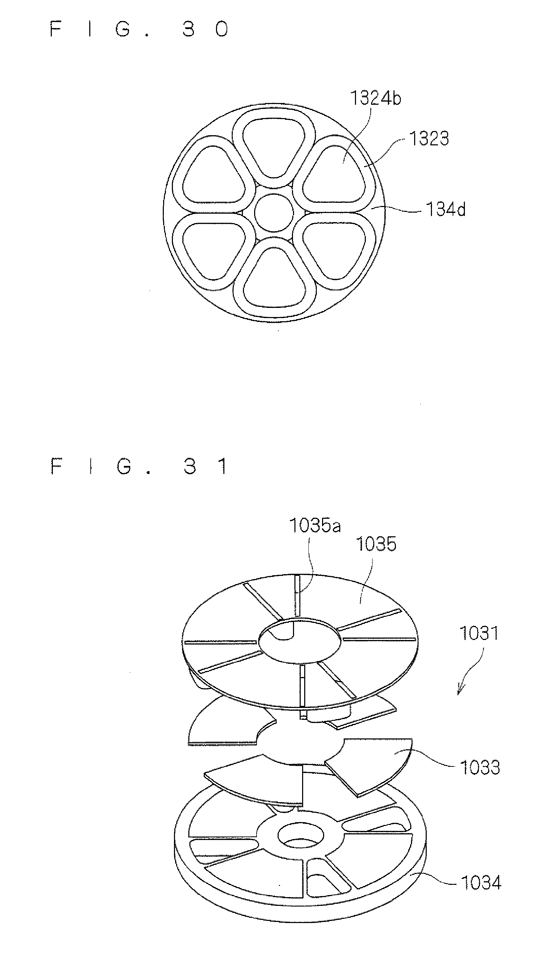

The above-mentioned wide portions 1324d, as shown in Figs. 29 and 30, provide between adjacent wide portions 1324d certain spaces 1325 for magnetic insulation between the teeth 1324b. These spaces 1325 extend radially in the radially outward direction from a center of the wide portions 1324d. This configuration allows an increase in the area of the stator core that faces the air gap 1041, thereby allowing enhancement of flux linkage. Now, inner peripheral portions (regions S2 in Fig. 29) and outer peripheral portions (regions S1 in Fig. 29) of the adjacent wide portions 1324d with respect to the center of rotation, each portion may be in slight contact (or connection). In this case, the relative positions of the teeth 1324b can be defined before attachment of the teeth 1324b to the back yoke 1324a. The areas of the contacts should desirably be as small as possible in order to minimize magnetic flux leakage.

Instead of directly winding the coils around the teeth, the process may be such that the first insulating material, the second insulating material, and if necessary, the third insulating material are provided around a bobbin, then the coils are wound around those insulating materials, and then the teeth are inserted after removal of the bobbin. This can be used for example when the fixing of teeth with a jig is difficult, or when applying only strong tension at the time of winding coils around teeth is insufficient in strength.

Fig. 31 shows an example of a rotor of the motor with a stator on one side according to this embodiment B1. Since the above-mentioned motor 1031 includes the permanent magnet 1033 and thus can increase the magnetic flux density in the air gap 1041 (shown in Fig. 20) at the time of motor operation, high-power and high-efficiency compressor can be achieved. Here, the above-mentioned permanent magnet 1033 is not a necessity.

The above-mentioned rotor 1031 further includes a rotor plate 1035 that sandwiches the permanent magnet 1033 with the back yoke 1034. This rotor plate 1035 is made of a magnetic material and provided with slits 1035a for magnetic insulation between adjacent magnetic poles of the permanent magnet 1033. These slits 1035a extend radially in the radially outward direction from the center of the rotor plate 1035. These slits 1035a are provided only in the rotor plate 1035 and not in the back yoke 1034. Since the demagnetizing filed has no direct influence on the above-mentioned permanent magnet 1033, the demagnetizing ability increases. Further, when the above-mentioned permanent magnet 1033 is a sintered rare-earth magnet or the like, the high-frequency component of the magnetic flux hardly reaches the inside of the permanent magnet 1033, which reduces the generation of eddy current inside the permanent magnet 1033 and thereby allows loss reduction and a decrease in temperature rise. Here, the above-mentioned rotor plate 1035 is not a necessity.

In the motor with the above-mentioned configuration, since a dust core made of pressed magnetic powder having a small eddy-current loss is used for the teeth 1024b (1124b, 1324b); and the back yoke 1024a (1124a, 1324a) formed of a laminated steel sheet having a sufficient strength is held by press fitting or shrink fitting, the motor that can hold the stator core 1024 (1124, 1324) by press fitting, shrink fitting, or the like can be achieved without impairment of motor characteristics.

Further, by making the portions of the above-mentioned plurality of teeth 1024b (1124b, 1324b) which are buried in the back yoke 1024a (1124a, 1324a) thinner than the other portions thereof which are not buried in the back yoke 1024a (1124a, 1324a), the positioning at the time of insertion becomes easy, which improves air-gap accuracy.

Still further, since this is an axial gap type motor in which the above-mentioned stator 1021 and rotor 1031 face each other in a plane that is generally orthogonal to the shaft 1020, it can be downsized by reducing the axial dimension.

Still further, although, due to the use of the rotor 1031 with the permanent magnet 1033, the magnetic flux generated by the permanent magnet and thus containing a high harmonic content passes through the teeth 1024b (1124b, 1324b), the use of a dust core with a small eddy-current loss for the teeth 1024b (1124b, 1324b) allows a further reduction in iron loss.

Still further, since the outer peripheral portion of the back yoke 1024a (1124a, 1324a) formed of a laminated steel sheet with a sufficient strength is shrink fitted or press fitted to the inside of the casing 1010, the back yoke 1024a (1124a, 1324a) can be held in the casing 1010 with reliability.

### (Embodiment B2)

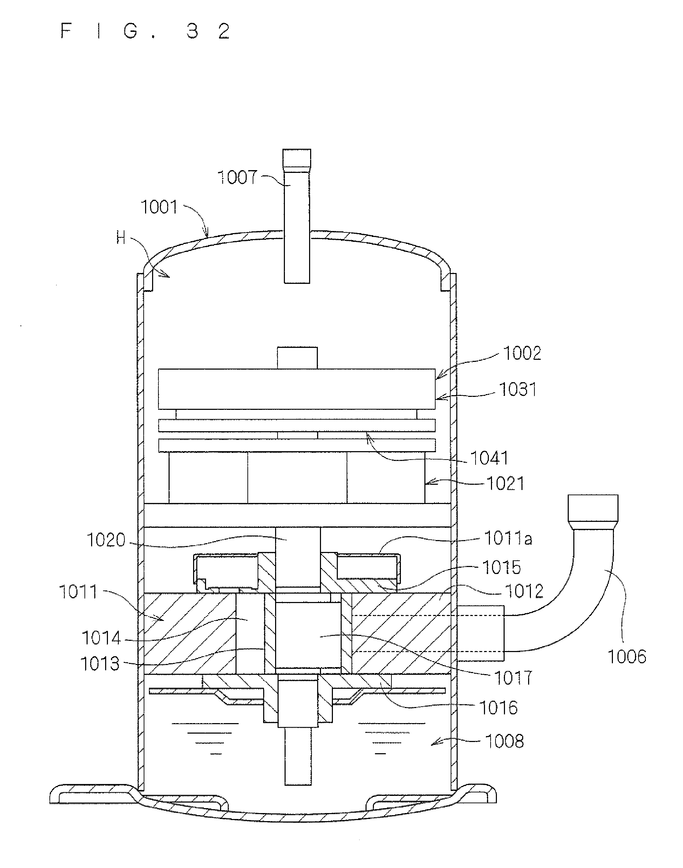

Fig. 32 is a longitudinal cross-sectional view of a closed rotary compressor equipped with a motor according to embodiment B2. The rotary compressor according to this embodiment B2 employs the motor according to embodiment B1.

This rotary compressor, as shown in Fig. 32, includes a motor 1002 located within a closed container 1001 which is one example of a casing, and a compression part 1011 located within the closed container 1001 and under the motor 1002 and driven by the motor 1002. Here, the upward and downward directions refer to a direction along a central axis of the closed container 1001 irrespective of whether or not the central axis of the closed container 1001 is inclined with respect to a horizontal plane.

The above-mentioned motor 1002 is located in a region of the closed container 1001 which is filled with a high-pressure refrigerant discharged from the compression part 1011. More specifically, within the closed container 1001 is a high-pressure area H, and this rotary compressor is a so-called high-pressure dome type compressor.

The above-mentioned motor 1002 includes the stator 1021, the rotor 1031 located above this stator 1021 with the air gap 1041 therebetween, and the shaft 1020 that is fixed to this rotor 1031 and transmits a torque of this rotor 1031 to the compression part 1011 and that extends out of this rotor 1031 to be rotatably held by a bearing.

The above-mentioned compression part 1011 includes a cylindrical main body 1012, and a top plate 1015 and a bottom plate 1016 that are attached respectively to upper and lower open ends of this main body 1012. The above-mentioned shaft 1020 penetrates the top plate 1015 and the bottom plate 1016 to enter the inside of the main body 1012.

Inside the above-mentioned main body 1012, a roller 1013 that is fitted into a crank pin 1017 provided on the shaft 1020 is revolvably located, and revolutions of this roller 1013 produce compression effects. In other words, a compression chamber 1014 is formed between the outer face of the roller 1013 and the inner face of the main body 1012.

The above-mentioned closed container 1001 includes a suction pipe 1006 that opens into the compression chamber 1014 on the low-pressure side of the compression part 1011, and a discharge pipe 1007 that opens to the upper side (downstream side) of the motor 1002. The above-mentioned compression part 1011 includes a discharge hole 1011a that opens to the motor 1002 side.

The above-mentioned shaft 1020 has its one end rotatably supported by the bottom plate 1016 of the compression part 1011 and its other end rotatably supported by the stator 1021.

The above-mentioned closed container 1001 contains, on the lower side, lubricating oil 1008 in which the lower portion of the shaft 1020 is immersed. This lubricating oil 1008 runs up the inside of the shaft 1020 with the rotation of the shaft 1020 to lubricate a slider or the like of the compression part 1011.

Next, the effect of the above-mentioned rotary compressor is described.

A refrigerant is supplied from the above-mentioned suction pipe 1006 to the compression chamber 1014 in the compression part 1011, and then, the compression part 1011 is driven by the motor 1002 to compress the refrigerant. The compressed refrigerant along with the lubricating oil is discharged from the discharge hole 1011a of the compression part 1011 into the closed container 1001, transmitted through the motor 1002 to the high-pressure area H, and then discharged to the outside of the closed container 1001 from the discharge pipe 1007.

At this time, a refrigerant path (not shown) needs to be formed inside the back yoke of the stator 1021. Its position and shape are arbitrary.

The rotary compressor according to this embodiment B2 can install axial gap type motors which have been difficult to install for relatively high-power applications. Thus, a scaled-down and high-efficiency (resulting from a reduction in copper loss) rotary compressor can be achieved.

While the above-mentioned embodiment B2 has described a rotary compressor using an axial gap type motor, the invention may be applied not only to rotary compressors but also to other compressors such as scroll compressors.

Also, while, in the above-mentioned embodiment B2, the motor 1002 drives the compression part 1011 as a driven part, the driven part driven by the motor according to the invention is not limited to a compression part but may be any other driven part with other configurations such as being driven by rotation of the main shaft of a motor.

Further, for rotary compressors, a compression chamber may be configured by a rotor and a cylinder in which the rotor itself is provided with a movable piston and the cylinder is brought into intimate contact with the rotor on the side opposite to the air gap. In this case, no shaft is necessary between the rotor and a compression mechanism. As another alternative, if a fixed axle extends from a stator toward a rotor and a bearing is provided between the fixed axle and the rotor, no shaft to rotate with the rotor is necessary and it becomes possible to prevent vibrations due to torsion between the rotor and a compression mechanism. Accordingly, in the above cases, a shaft is not a necessity.

### (Embodiment B3)

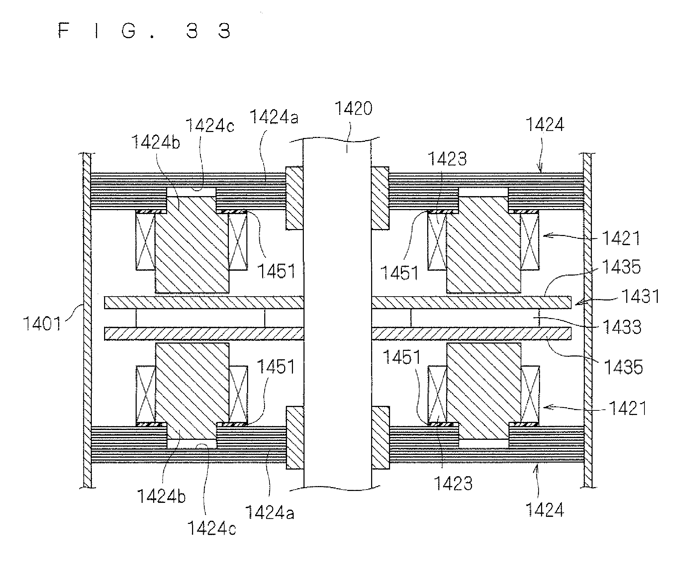

Fig. 33 is a cross-sectional view of the outlines of a motor according to embodiment B3 of the invention.

The motor according to this embodiment B3, as shown in Fig. 33, includes a rotor 1431 attached to a shaft 1420, and two stators 1421 located on both axial sides of the rotor 1431. The above-mentioned rotor 1431 rotates on the axis of the shaft 1420, or a certain rotation axis. These stators 1421 each are the stator 1021 shown in Fig. 20 according to embodiment B1. The above-mentioned rotor 1431 includes two rotor plates 1435 and a permanent magnet 1433 located between those two rotor plates 1435.

A first insulating material 1451 is provided for insulation between the above-mentioned back yoke 1424 and coils 1423.

While the stators 1421 of the motor according to the above-mentioned embodiment B3 are identical in configuration to that according to embodiment B1, the presence of the two back yokes 1424 located at a certain distance inside the casing 1410 have the effect of improving stiffness of the casing 1410. Further, in the motor according to this embodiment B3, attractive forces acting on the rotor 1431 from the stators 1421 provided on both axial sides can cancel thrust force acting on the rotor 1431 and the shaft 1420 and can also reduce force acting in the thrust direction on a bearing (not shown) that supports the shaft 1420. Still further, using both sides of the permanent magnet 1433 for the pair of upper and lower stators 1421 minimizes the number of permanent magnets.

Alternatively, the back yoke 1034 of the rotor 1031 shown in Fig. 31 may be replaced by the rotor plate 1035 and used as the rotor 1431. The above-mentioned rotor 1431 has magnetic poles on both sides and thus has four poles. Here, the back yoke 1434 is not a necessity, and when the back yoke is omitted, the permanent magnet 1433 will use both sides of a single-layer permanent magnet as magnetic poles.

In the motors according to embodiments B1 and B3, the pattern of winding is not limited to concentrated winding, distributed winding, wave winding, or the like, and there is freedom of choice. Further, the combination and ratio of the number of stator teeth and the number of rotor poles are arbitrary.

### (Embodiment C1)

Hereinbelow, a method of manufacturing an armature core according to embodiment C 1 is described.

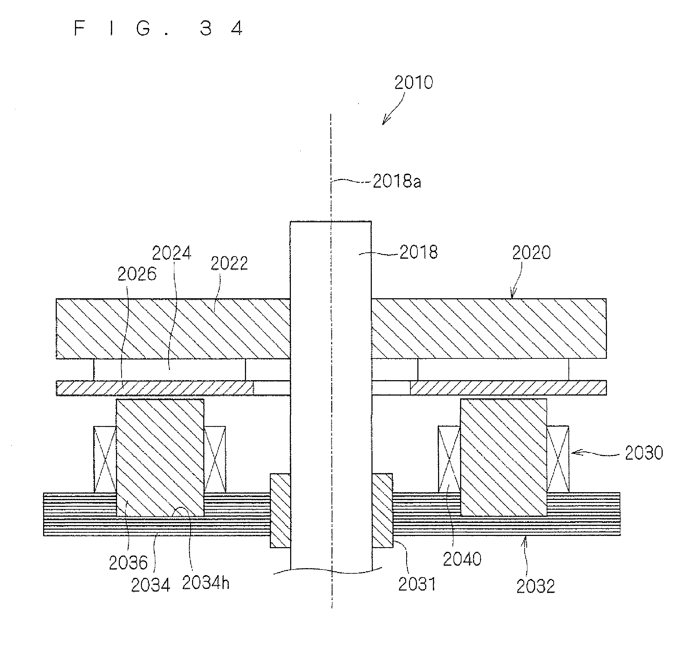

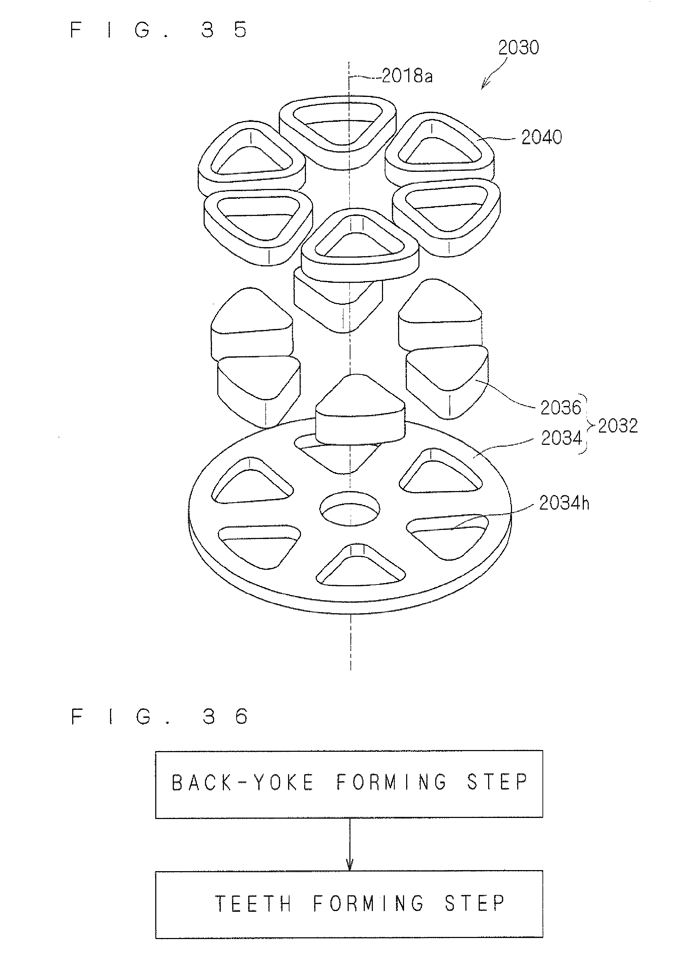

First, the overall configuration of an axial gap type motor 2010 that adopts an armature core according to the invention is described. Fig. 34 is a cross-sectional view of an axial gap type motor, and Fig. 35 is an exploded perspective view of an armature core and coils.

This axial gap type motor 2010 generates a torque around a certain rotation axis 2018a and includes a rotor 2020 as a field and a stator 2030 as an armature.

The above-mentioned stator 2030 has a generally disk-shaped overall configuration and is fixed at a certain position within a casing not shown.

The rotor 2020 also has a generally disk-shaped overall configuration and located on one surface side (in the present example, the upper surface side) of the above-mentioned stator 2030 with an air gap therebetween. This rotor 2020 is coupled and fixed to a shaft 2018. The shaft 2018 penetrates a bearing 2031 of the stator 2030 to extend outwardly (in the present example, downwardly) and is freely supported through the above-mentioned bearing 2031 or the like. Thus, the stator 203 is supported to be rotatable on the rotation axis 2018a that is the central axis of the shaft 2018. That is, the motor 2010 according to the invention is an axial gap type motor 2010 in which the rotor 20 as a field and the stator 2030 as an armature face each other with an air gap therebetween with respect to a direction along the rotation axis 2018a.

The above-mentioned stator 2030 includes a stator core 2032 as an armature core, and a plurality of coils 2040 attached to the stator core 2032. This stator 2030 faces the rotor 2020 with an air gap therebetween, with each of their teeth 2036, which is described later, in an upright position toward the above-mentioned rotor 2020.

The stator core 2032 includes a generally disk-shaped back yoke 2034 and the plurality of teeth 2036.

The back yoke 2034 is formed in a generally disk shape of a laminated steel sheet that is formed by laminating, in the direction of the rotation axis 2018a, thin plates such as magnetic steel sheets that extend in a direction generally orthogonal to the rotation axis 2018a. The laminated thin plates are, for example, silicon steel sheets or other thin plates made of a magnetic material such as amorphous and permalloy. This back yoke 2034 has one major surface (the upper surface in Fig. 34) that is generally perpendicular to the rotation axis 2018a, and the other major surface (the lower surface in Fig. 34) on the other side that is generally perpendicular to the rotation axis 2018a. Also, this back yoke 2034 is attached and fixed to the inside of a casing by press fitting, shrink fitting, or the like. The back yoke 2034 of a laminated steel sheet prevents breakage of the back yoke 2034 and allows the fixing of the back yoke 2034 to the inside of the casing with sufficient strength.

The back yoke 2034 has, generally at the central portion, a bearing 2031 for supporting the shaft 2018. The position of the bearing, however, is not limited thereto.

The teeth 2036 are arranged in an annular ring around the rotation axis 2018a so that they protrude from one major surface of the back yoke 2034 on the side facing the rotor 2020. The teeth 2036 protrude from one major surface of the back yoke 2034 on the rotor side in the direction along the rotation axis 2018, and their protruding portions are wound therearound with coils 2040. That is, in the present example, the coils 2040 are concentratedly would around the individual teeth 2036. In practice, there is an insulating material, such as insulating film, between each of the coils 2040 and each of the teeth 2036, but the description thereof is omitted in the following.

More specifically, there are a total of six teeth 2036, around which a total of six coils 2040 are wound respectively. The coils 2040 are, for example, arranged circumferentially of the stator 30 repeatedly in the order of U-phase, V-phase, and W-phase, and each these three phases of coils are star-connected so that current is supplied from an inverter. Thus, the coils 2040 are magnetized to generate magnetic flux in the direction of protrusion of the teeth 2036, by which the above-mentioned rotor 2020 is rotated.

The teeth 2036 are formed of a dust core made of pressed magnetic powder, or preferably an iron-dust core. These teeth 2036 have, in a plane that is generally orthogonal to the rotation axis 18a, a cross section defined by two sides that are generally parallel to the sides of cross sections of adjacent teeth 2036, and one side that connects those generally parallel two sides on the outer periphery of the back yoke 2034. In the present example, the side on the outer periphery is arc-shaped, so that the cross sections of the teeth 2036 are generally fan-shaped cross sections with their central angles oriented toward the rotation axis 2018a. Of course, the side on the outer periphery may be linear, and the cross sections of the teeth 2036 may be generally in the shape of triangles.

Angular portions of the teeth 3036 around which the coils 2040 are wound are rounded. This prevents chipping of those angular portions and expansion of the winding of the coils 40. This is especially effective in a concentrated winding in which the coils 2040 are wound around the individual teeth 2036. The radii of those rounded angular portions should preferably be not less than twice the diameters of the winding coils. This is because experiments show that this degree of radii can effectively prevent expansion of the winding.

Alternatively, the portions of the teeth 2036 around which coils are wound may be of other shapes such as a generally rectangle in cross section. However, by forming the portions of the teeth 2036 around which the coils are wound into a generally fan shape or generally triangular shape, both the teeth 2036 and the coils 2040 can be arranged with high occupation rate. Even in this case, only the portions around which the coils 2040 are wound should be of generally fan shape or generally triangular shape as described above, and the other portions such as the portions buried in the back yoke 2034 and the portions facing the rotor 2020 may be of any other cross-sectional shape.

As another alternative, the teeth 2036 may have, at the ends thereof, flange portions that protrude outwardly of the ends. The flange portions may be configured either to be integrally formed with the teeth 2036 or to be retrofitted to the teeth 2036. Especially, a manufacturing method suitable for the configuration in which flange portions are formed integrally with the teeth 2036 is described in embodiment C2.

The rotor 2020 includes an annular ring-shaped rotor-side back yoke 2022 attached to the shaft 2018, and a plurality of permanent magnets 2024 provided on the surface of this rotor-side back yoke 2022 on the stator 2030 side. On the stator 2030 side of the plurality of permanent magnets 2024, rotor magnetic substances 2026 are provided as field-side magnetic material members.

The rotor-side back yoke 2022 is made of a magnetic material such as a laminated steel sheet core or a dust core. This rotor-side back yoke 2022 fixedly holds each of the teeth 2036 as well as contributes to demagnetization of the permanent magnets 2024 on the opposite side of the stator 2030 and a reduction in eddy current loss.

Further, the permanent magnets 2024 are circularly arranged at equal intervals around the rotation axis 2018a on the surface of the rotor-side back yoke 2022 on the stator 2030 side. The permanent magnets 2024 are arranged around the rotation axis 2018a to exhibit alternately different magnetic poles, and generate magnetic flux in the direction along the rotation axis 2018a.

The rotor magnetic substances 2026 are formed into a plate shape that is larger (in the present example, one size larger) than the end faces of the permanent magnets 2024 on the stator 2030 side, and they are attached to the end faces of the permanent magnets 2024 on the stator 2030 side. These rotor magnetic substances 2026 are magnetically divided via slits or the like among the permanent magnets 2024. The rotor magnetic substances 2026 have the function of passing magnetic fluxes between each of the teeth 2036 and the rotor 2020 with minimum leakage. However, these rotor magnetic substances 2026 may be omitted. The rotor magnetic substance plates 2026 should preferably be not in close proximity to the shaft. This is to prevent the magnetic fluxes of the permanent magnets 2024 from being short-circuited through the shaft of a magnetic material. This does not apply to a shaft made of a non-magnetic material.

The rotor 2020 as a field should preferably include the permanent magnets 2024. This is because, as compared with the case where the magnetization is produced by winding, the permanent magnets 2024 can increase the magnetic flux density in the stator core 2032 or the like. Further, the presence of the permanent magnets 2024 with sufficiently larger thicknesses than the gap length in a magnetic circuit results in that the magnetic reluctance of the permanent magnets 2024 constitutes most of the total magnetic reluctance of the magnetic circuit, which relatively reduces the influence of the teeth 2036 formed of a dust core with lower magnetic permeability than a laminated steel sheet.

A method of manufacturing the stator core 2032 is described. Fig. 36 is a flowchart of the manufacturing method according to the invention. The manufacturing method according to the invention includes a back-yoke forming step (step (a)) and a teeth forming step (step (b)).

In the back-yoke forming step, the back yoke 2034 is formed of a laminated steel sheet that is formed by laminating thin plates stamped into a certain shape, in the direction along the rotation axis 2018a. This back yoke 2034 has a plurality of teeth fixing recesses 2034h formed therein. The plurality of teeth fixing recesses 2034h are formed at the positions where the teeth 2036 are fixed, that is, formed at generally regular intervals around the rotation axis 2018a in one major surface of the back yoke 2034. In the present example, the teeth fixing recesses 2034h are generally fan-shaped or generally rectangular, the shape of which corresponds to the portions of the teeth 2036 around which coils are wound, and they are formed to have closed ends that do not penetrate the back yoke 2034.

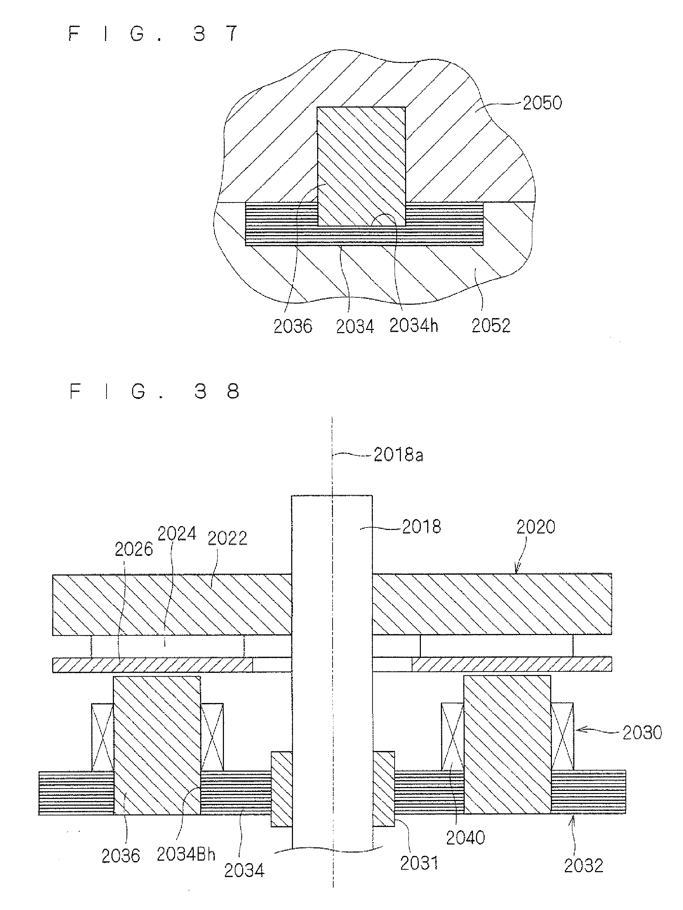

In the teeth forming step, with the back yoke 2034 fixedly inserted into a molding die for molding the teeth 2036, the teeth 2036 are molded of a dust core. For example, as shown in Fig. 37, when the teeth 2036 are molded using a first die 2050 and a second die 2052, the back yoke 2034 is previously located within the first die 2050 and the second die 2052 and fixed in the second die 2052. In this condition, a dust core material is provided between the teeth fixing recesses 2034h and a mold face of the first molding die 2050, and pressure is applied between both the dies 2050 and 2052 so that the teeth 2036 are formed by compression molding so as to protrude into and out of the teeth fixing recesses 2034h. Thus, the teeth 2036 are molded of a dust core, integrally with the teeth fixing recesses 2034h of the back yoke 2034. That is, considering with reference to the teeth 2036, the teeth 2036 are also molded on the inner peripheral surfaces of the teeth fixing recesses 2034h as molded faces and formed integrally with the back yoke 2034. In this way, the stator core 2032 is manufactured by a kind of insertion molding.

Alternatively, the teeth 2036 may be formed by extruding a dust core material into the teeth fixing recesses 2034h and the mold face of the first die 2050.

After that, the coils 2040 are mounted on the teeth 2036. The coils 2040 may be wound directly around the teeth 2036, or they may be wound around a frame at a different position and then fitted and mounted at the outside of the teeth 2036. Especially when the teeth 2036 have no integrally-formed flange portions, the coils can be wound around a frame at a different position and then fitted and mounted at the outside of the teeth 2036. A manufacturing method suitable for direct winding of the coils 2040 around the teeth 2036 is described in embodiment C2. Here, with the coils 2040 as well as the back yoke 2034 fixed in a die, a dust core material may be molded by compression.

According to the aforementioned manufacturing method of the stator core 2032 and the stator core 2032 itself, the back yoke 2034 formed of a laminated steel sheet allows the stator core 2032 to be held in a casing by shrink fitting, press fitting, or the like, which ensures sufficient strength of the stator core 2032. Further, the teeth 2036 formed of a dust core with a small eddy-current loss results in excellent motor characteristics. Still further, since the back yoke 2034 is formed with the teeth fixing recesses 2034h and, with this back yoke 2034 fixed in the dies 2050 and 2052, the teeth 2036 are molded of a dust core, it is possible to securely hold the teeth 2036 and the back yoke 2034 with no clearance therebetween while preventing breakage of the teeth 36.

Further, while the methods of press fitting or shrink fitting the teeth 2036 to the back yoke 2034 can possibly reduce magnetic properties due to residual stress, the manufacturing method according to the invention is less likely to cause such residual stress and thus can effectively prevent a reduction in magnetic properties. Further, since a laminated face of the laminated steel sheet is exposed in the teeth fixing recesses 2034h, the teeth 2036 can also be formed so as to fill the clearance formed by the laminated face. This ensures more complete interlayer insulation and prevents the teeth 2036 from coming off from the teeth fixing recesses 2034h with more reliability.

Fig. 38 is a cross-sectional view showing a first alternative example of the teeth fixing recesses according to embodiment C1. As shown in this figure, teeth fixing recesses 2034Bh may be in the shape of holes that penetrate the back yoke 2034. That is, the teeth fixing recesses include the closed-end teeth fixing recesses 2034h that do not penetrate the back yoke 2034 and the hole-shaped teeth fixing recesses 2034Bh that penetrate the back yoke 2034.

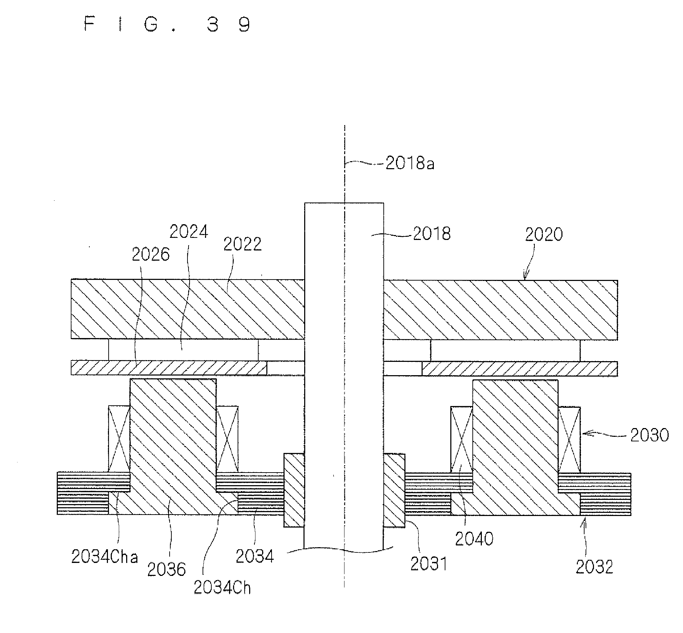

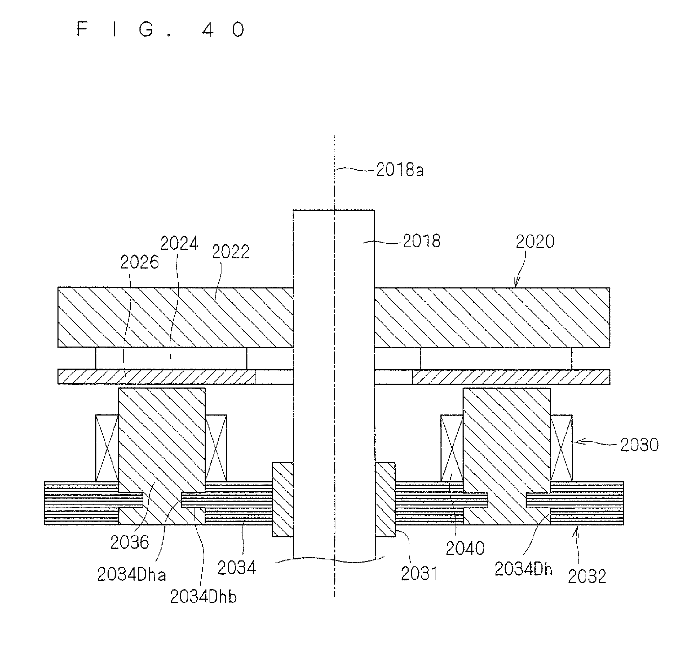

Fig. 39 is a cross-sectional view showing a second alternative example of the teeth fixing recesses according to embodiment C1, and Fig. 40 is a cross-sectional view showing a third alternative example of the teeth fixing recesses according to embodiment C1.

According to these alternative examples, teeth fixing recesses 2034Ch and 2034Dh have projections and/or depressions formed therein.

In the example shown in Fig. 39, the teeth fixing recesses 2034Ch are formed in the shape of holes that penetrate the back yoke 2034, and their inner peripheral surfaces are formed in the shape of projections and/or depressions that increase the diameter at a stepped portion 2034Cha on the other major surface side of the back yoke 2034. The stepped portion 2034Cha forms an abutment surface opposite to the direction of the protrusion of the teeth 2036 and receives forces in the direction of the protrusion of the teeth 2036.

Further, as in the example shown in Fig. 40, the teeth fixing recesses 2034Dh are formed in the shape of holes that penetrate the back yoke 2034, and their inner peripheral surfaces are shaped to have flange projections 2034Dha that protrude inwardly at about the midpoint position along the direction of thickness. Abutment surfaces 2034Dhb of these flange projections 2034Dha which are opposite to the direction of the protrusion of the teeth 36 receive forces in the direction of the protrusion of the teeth 2036.

According to these alternative examples, the teeth fixing recesses 2034Ch and 2034Dh have projections and/or depressions formed therein, which can effectively prevent the coming off of the teeth 2036. Of course, the above-mentioned projections and/or depressions are not limited to the shapes described in the above-mentioned examples, and they may, for example, be such as to protrude in the whole circumferential direction of the teeth fixing recesses 2034Ch and 2034Dh, or to partially protrude along the circumferential direction, or to protrude in a spherical or prism shape.

Further, since the teeth fixing recesses 2034Ch and 2034Dh have the abutment surfaces 2034Cha and 2034Dhb opposite to the direction of the protrusion of the teeth 2036, they can receive forces in the direction of the protrusion of the teeth 2036 and thereby can more effectively prevent the coming off of the teeth 2036. Especially, due to the attractive forces of the permanent magnets 2024 of the rotor 2020, forces in the direction of the protrusion of the teeth 2036 act on the teeth 2036. However, they can effectively be received to prevent the coming off of the teeth 2036.

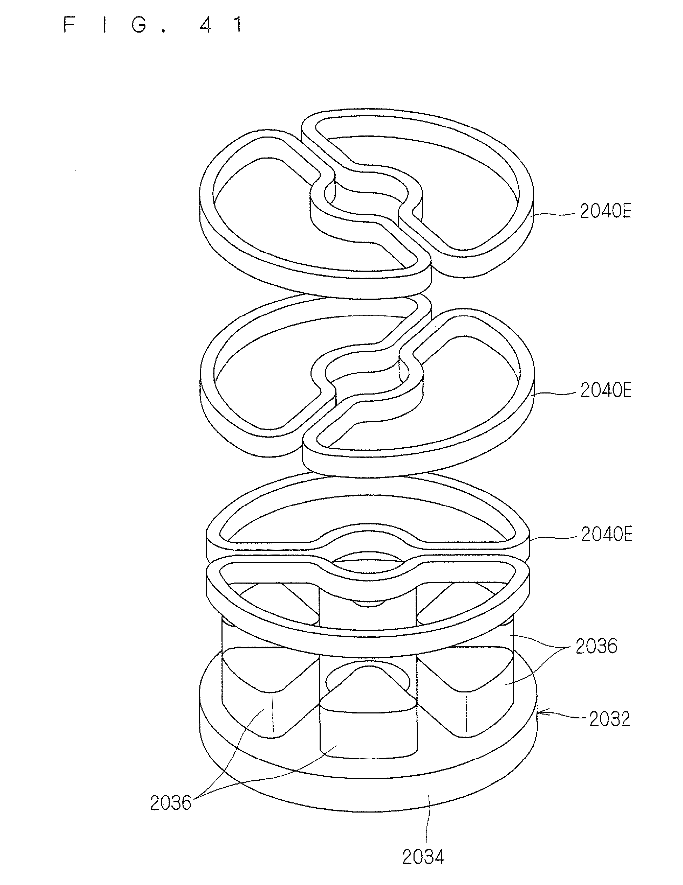

Fig. 41 is a diagram showing an alternative example of the winding of the coils. That is, the coils 2040 are not necessarily concentrically wound, and, as shown in Fig. 41, coils 2040E wound in a distributed winding pattern may be used, or of course, coils wound in any other different winding pattern may be used. For the coils 2040E wound in a distributed winding pattern, the plurality of coils 2040E are mounted in a plurality of layers in the direction along the rotation axis 2018a, in which case it is preferred that the coils 2040E be placed by bending or the like as appropriate so as to be placed in the same layer around the teeth 2036, i.e., generally in the same plane relatively to the direction along the rotation axis 2018a.

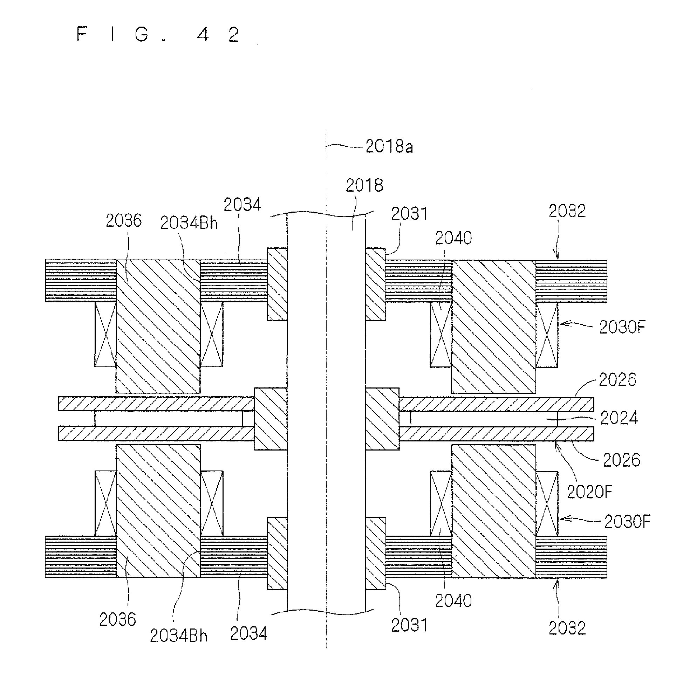

Fig. 42 shows an alternative example according to embodiment C1 in which stators are placed on both sides of a rotor. According to this alternative example, a rotor 2020F has no rotor-side back yoke 2020 but has the rotor magnetic substances 2026 placed on both sides, so that the rotor 2020F exhibits alternate magnetic poles around the rotation axis 2018a on both surface sides. The rotor 2020F couples the rotor magnetic substances 2026 to the shaft through a spacer or holder of a non-magnetic material. When the shaft is made of a non-magnetic material, the shaft may be inserted and held in the inner periphery of the rotor magnetic substances 2026. Both upper and lower stators 2030F each are identical to the stator 2030 described above and shown in Fig. 38, and both the stators 2030F are fixed with their respective teeth 2036 directed toward the rotor 2020 side. The other parts of the configuration are almost the same as those of the configuration described above.

According to this alternative example, attractive forces of magnets acting on the rotor 2020 can be cancelled by air gaps on both sides, which reduces loss in the bearing 2031 as well as increases the life of the bearing 2031.

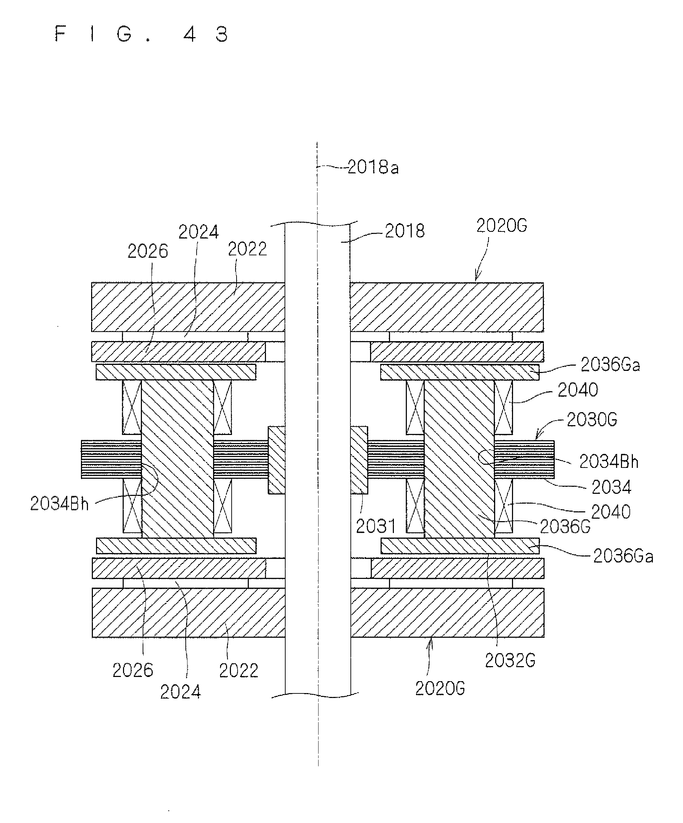

Fig. 43 shows another alternative example according to embodiment C1 in which rotors are placed on both sides of a stator. According to this alternative example, a stator core 2032G is configured such that teeth 2036G protrude on both sides of a back yoke 2034G. These teeth 2036G are formed integrally with the back yoke 2034 as in the method of manufacturing the above-mentioned teeth 2036. Further, rotors 2020G with the same configuration as the above-mentioned rotor 2020 are rotatably placed so as to face the teeth 2036G that protrude on both sides of this stator 2030. In other words, the teeth 2036G are also placed on the other major surface of the back yoke 2034 on the opposite side of the one major surface. The teeth 2036G on both sides have flange portions 2036Ga formed at the ends thereof.

Even in this case, magnetic attractive forces can be cancelled by the air gaps on both sides, which reduces loss in the bearing 2031 as well as increases the life of the bearing 2031.

On both sides of the stator 2030G, the positions of the teeth 2036G and the pattern of winding of the coils 2040 do not necessarily have to be the same. For example, the positions of the teeth 2036G on both sides of the stator 2030G may be shifted along the circumferential direction of the back yoke 2034. This achieves skew effects.

### (Embodiment C2)

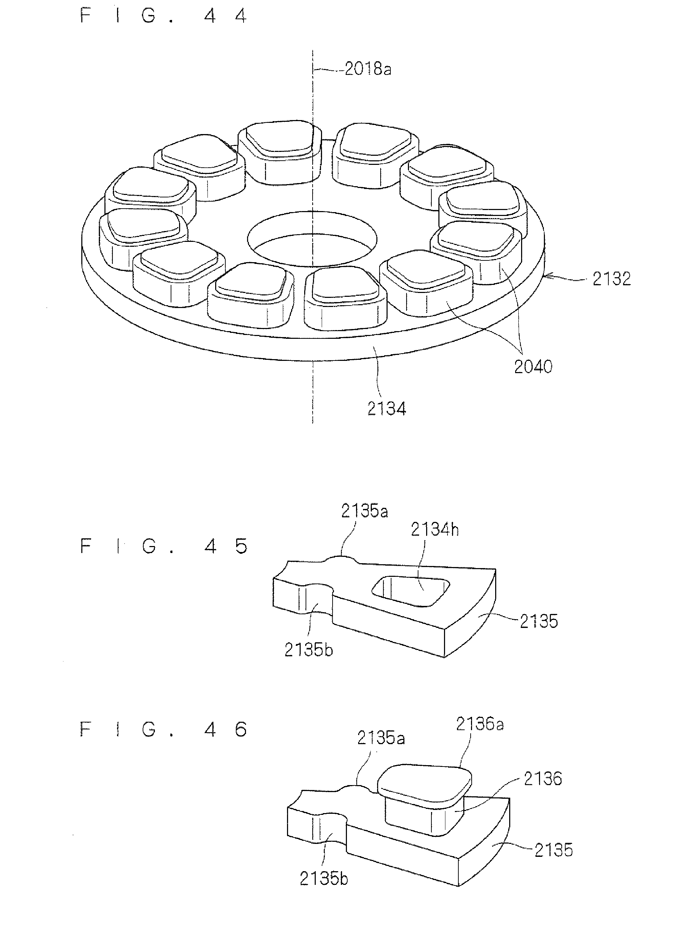

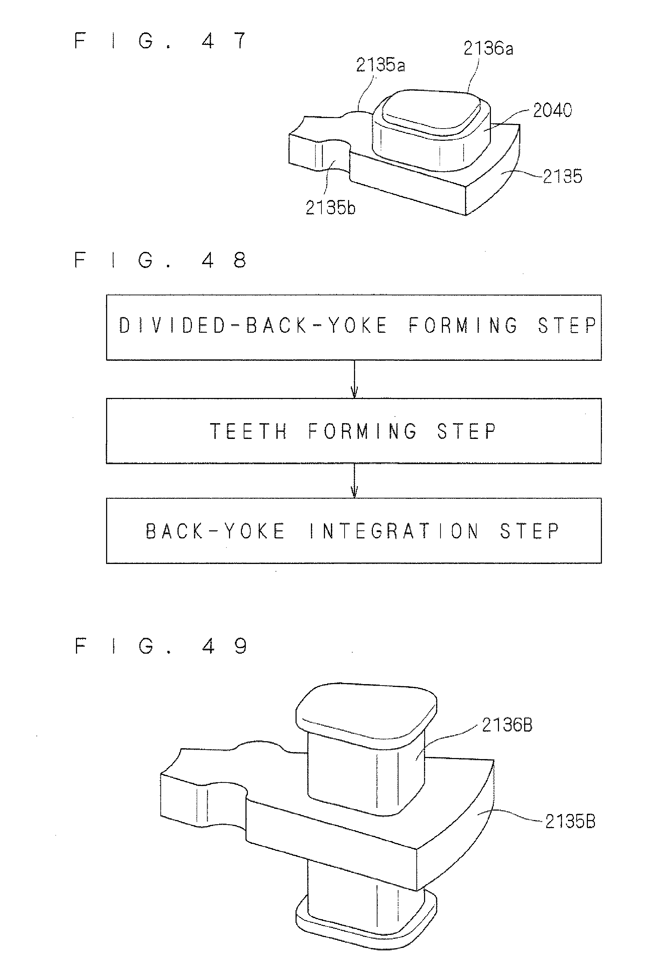

Hereinbelow, a method of manufacturing an armature core according to embodiment C2 is described. Fig. 44 is a perspective view showing a stator core as an armature core according to this embodiment; Figs. 45, 46 and 47 are diagrams showing the manufacturing process; and Fig. 48 is a flowchart of this manufacturing method. The same components to those described in the above-mentioned embodiment C1 are designated by the same reference numerals or characters and not described here.

According to this manufacturing process, in the above-mentioned back-yoke forming step (a), as shown in Fig. 45, divided back yokes 2135 which are divided according to each of the teeth 2136 are formed (a divided-back-yoke forming step). In the present example, the divided back yokes 2135 are formed generally in the shape of a fan by dividing the above-mentioned back yoke 2034 by the central angle of (360/*n*)° (where *n* is the number of the teeth), and they have teeth fixing recesses 2134h formed therein. The mating faces of the divided back yokes 2135 include projections 2135a and depressions 2135b that are fittable to each other. In the present example, generally semicircular projections 2135a and generally semicircular depressions 2135b are formed.

Then, in the above-mentioned next teeth forming step (b), with the divided back yokes 2135 fixed in a molding die, as shown in Fig. 46, the teeth 2136 are molded of a dust core so as to protrude into and out of the teeth fixing recesses 2134h. In the present example, the teeth 2135 have flange portions 2136a integrally formed at the ends thereof.

After that, as shown in Fig. 47, the coils 2040 are wound around the teeth 2136. At this time, the coils 2040 may be wound by rotating the teeth 2136, or the coils 2040 may be wound by turning a coil winding supply nozzle around the teeth 2136. In either case, such winding of the coils 2040 are easy because each of the teeth 2137 is divided. For example when the flange portions 2136a are not integrally formed, the coils 2040 may be mounted on the teeth 2136 after the divided back yoke 2135 are integrated together.

Then, in a back-yoke integration step (c), the divided back yokes 2135 are bonded and integrated together using an adhesive or the like to form the back yoke 2134 that is identical to the back yoke 2034, which completes the manufacture of the stator core 2132. At this time, the above-mentioned projections 2135a and depressions 2135b are fitted to each other for accurate alignment and strong integration. Alternatively, the divided back yokes 2135 may be integrated together without using an adhesive, but instead by fitting a ring to their outer peripheries or by being directly held by the inside diameter of a casing.

According to the manufacturing method of this stator core 2132, with the divided back yokes 2135 fixed in a molding die, the teeth 2136 are molded of a dust core so as to protrude into and out of the teeth fixing recesses 2134h. This allows the use of smaller molding dies than in the above-mentioned embodiment C1 and also facilitates handling of molding dies.

Further, since the teeth 2136 are molded into the divided back yokes 2135, for example even if the teeth 2136 are configured to have the flange portions 2136a at their ends, the coils 2040 can readily be wound around the teeth 2136 before integration of the divided back yokes 2135.

When rotors are placed on both sides of a stator (cf. Fig. 43), as shown in Fig. 49, teeth 2136B should be formed integrally on both sides of divided back yokes 2135B so as to protrude therefrom. The other parts can be manufactured using the same method as described above.

### (Embodiment C3)

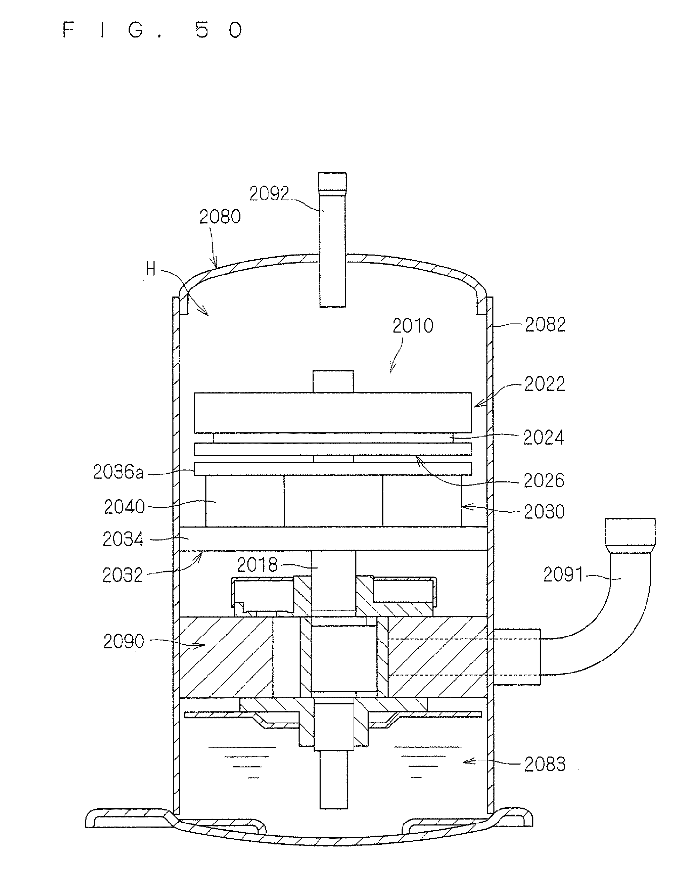

Hereinbelow, a compressor according to embodiment C3 is described. Fig. 50 is a cross-sectional view showing a compressor equipped with an axial gap type motor including the above-mentioned stator core 2032.

This compressor 2080 is a so-called high-pressure dome type compressor and includes a motor 2010 and a compression mechanism 2090 within a generally cylindrical closed container 2082 as a casing. The closed container 2082 has an oil reservoir 2083 in the lower part.

The compression mechanism 2090 is driven by the above-mentioned motor 2010 to compress a refrigerant supplied from a suction pipe 2091 and to discharge the compressed high-pressure refrigerant from a discharge pipe 2092.

The motor 2010 has the same configuration as that described with reference to Fig. 34 in the above-mentioned embodiment C1. This motor 2010 drives the compression mechanism 2090 through a shaft 2018.

This motor 2010 is provided in a high-pressure area H filled with high-pressure refrigerant gas within the above-mentioned closed container 2082, i.e., in the present example, above the compression mechanism 2090. In other words, this compressor 2080 is mounted fore-and-aft.

The installation configuration of the motor 2010 is described. This motor 2010 is placed in such a posture that the shaft 2018 is along the central axis of the closed container 2082. The stator 2030 is placed closer to the compression mechanism 2090, and the rotor 2020 is placed farther from the compression mechanism 2090. The stator 2030 is fixed to the inside of the closed container 2082 by press fitting or shrink fitting to the inside of the closed container 2082. The teeth 2036 of the stator 2030 have flange portions 2036a formed at the ends thereof.

The shaft 2018 coupled to the rotor 2020 penetrate the stator 2030 to be coupled to the compression mechanism 2090. Thus, rotary motion of the rotor 2020 is transmitted through the shaft 2018 to the compression mechanism 2090.

In this compressor 2080, the stator core 2032 formed of a laminated steel sheet is fixed to the closed container 2082 in order to fix and hold the stator 2030, so that the stator 2030 can be relatively firmly fixed by means of the stator core 2032 of relatively great strength. At the same time, a magnetic circuit with low magnetic reluctance can be formed by reducing clearance between the teeth 2036 and the stator core 2032. Further, even a low-profile compressor can increase both magnetic loading and electrical loading, so that it is possible to provide a high-efficiency compressor which is suitable for equipment such as an air conditioner that operates for a long time at low speed and low torque and that requires energy conservation.

According to the above-mentioned embodiments, the armature core may be applied to any of the rotors and the stators. Or, the armature core may be applied not only to the motors but also to a power generator.

While the motor and the method of manufacturing the motor, the compressor, and the method of manufacturing an armature core and the armature core itself according to the invention have been shown and described in detail, the foregoing description is in all aspects illustrative and not restrictive so that the invention is not limited thereto. It is therefore understood that numerous modifications and variations can be devised without departing from the scope of the invention.

## Claims

1. A motor comprising:
a rotor (31, 431, 531, 831, 1031, 1431) rotating on a certain rotation axis (1020, 1420); and
a stator (21, 121, 221, 321, 421, 621, 721, 821, 1021, 1421) including a stator core (24, 124, 224, 324, 424, 624, 724, 824, 1024, 1124, 1324, 1424) that faces said rotor (31, 431, 531, 831, 1031, 1431) with a space therebetween, and coils (23, 123, 223, 323, 423, 623, 723, 823, 1023, 1123, 1323, 1423) that are attached to the stator core (24, 124, 224, 324, 424, 624, 724, 824, 1024, 1124, 1324, 1424),
wherein said stator core (24, 124, 224, 324, 424, 624, 724, 824, 1024, 1124, 1324, 1424) includes:
a generally disk-shaped back yoke (24a, 124a, 224a, 324a, 424a, 624a, 824a, 1024a, 1124a, 1324a, 1424a) that is generally orthogonal to said rotation axis (1020, 1420); and
a plurality of teeth (24b, 124b, 224b, 324b, 424b, 624b, 724b, 824b, 1024b, 1124b, 1324b, 1424b) that are circumferentially arranged in an end face of said back yoke (24a, 124a, 224a, 324a, 424a, 624a, 824a, 1024a, 1124a, 1324a, 1424a) in a direction of said rotation axis so as to stand upright from said back yoke (24a, 124a, 224a, 324a, 424a, 624a, 824a, 1024a, 1124a, 1324a, 1424a) in the direction of said rotation axis, and that are formed of a dust core made of pressed magnetic powder, and
wherein said teeth (24b, 124b, 224b, 324b, 424b, 624b, 724b, 824b, 1024b, 1324b, 1424b) are buried to a certain depth in the direction of said rotation axis in said back yoke (24a, 124a, 224a, 324a, 424a, 624a, 824a, 1024a, 1324a, 1424a), or said teeth (24b, 124b, 224b, 324b, 424b, 624b, 724b, 824b, 1124b) are buried in said back yoke (24a, 124a, 224a, 324a, 424a, 624a, 824a, 1124a) to penetrate in the direction of said rotation axis.

2. The motor according to claim 1, wherein
said back yoke (24a, 124a, 224a, 324a, 424a, 624a, 824a) includes a laminated steel sheet formed by laminating thin plates that are generally orthogonal to said rotation axis in the direction of said rotation axis.

3. The motor according to claim 2, wherein
portions of said plurality of teeth (124b, 224b) which are buried in said back yoke (124a, 224a) are thinner than the other portions thereof which are not buried in said back yoke (124a, 224a).

4. The motor according to claim 2, wherein
portions of said plurality of teeth (224b) which are buried in said back yoke (224a) gradually taper down toward the tips so as to be thinner than the other portions thereof which are not buried in said back yoke (224a).

5. The motor according to claim 2, wherein
there is clearance between the end of the portions of said plurality of teeth (124b) which are buried in said back yoke (124a), and said back yoke (124a).

6. The motor according to claim 2, wherein
said back yoke (424a) of said stator (421) includes:
a plurality of recesses (424c) formed to receive said plurality of teeth (424b); and
stress relaxation holes (401, 402) formed on at least either the inner or outer peripheral side of said plurality of recesses (424c).

7. The motor according to claim 2, wherein
said back yoke (624a) of said stator core (621) has notches (600) formed in an outer radial portion of a region where said plurality of teeth (624b) are located.

8. The motor according to claim 2, wherein
said plurality of teeth (324b, 624b) of said stator core (321, 621) each have a wide portion (324d, 624c) provided on the side facing said rotor (31).

9. The motor according to claim 2, wherein
said stator (21, 121, 221, 321, 421, 621, 721, 821) and said rotor (31, 431, 531, 831) face each other in a plane that is generally orthogonal to said rotation axis.

10. The motor according to claim 2, wherein
said stator (421) includes two stators located so as to sandwich said rotor (431) from both sides in the direction of said rotation axis.

11. The motor according to claim 2, wherein
said rotor (31, 431, 531, 831) includes a permanent magnet (33, 433, 533).

12. The motor according to claim 2, wherein
an outer peripheral portion of said back yoke (24a, 124a, 224a, 324a, 424a, 624a, 824a) of said stator core (24, 124, 224, 324, 424, 624, 724, 824) is shrunk fitted or press fitted to the inside of a casing (10).

13. A method of manufacturing a motor that comprises:
a rotor (31,431,531,831) rotating on a certain rotation axis; and
a stator (21, 121, 221, 321, 421, 621, 721, 821) including a stator core (24, 124, 224, 324, 424, 624, 724, 824) that faces said rotor (31, 431, 531, 831) with a space therebetween, and coils (23, 123, 223, 323, 423, 623, 723, 823) that are attached to the stator core (24, 124, 224, 324, 424, 624, 724, 824),
wherein said stator core (24, 124, 224, 324, 424, 624, 724, 824) of said stator (21, 121, 221, 321, 421, 621, 721, 821) includes:
a back yoke (24a, 124a, 224a, 324a, 424a, 624a, 824a) including a laminated steel sheet formed by laminating thin plates that are generally orthogonal to said rotation axis in a direction of said rotation axis; and
a plurality of teeth (24b, 124b, 224b, 324b, 424b, 624b, 724b, 824b) that are circumferentially located in an end face of said back yoke (24a, 124a, 224a, 324a, 424a, 624a, 824a) in the direction of said rotation axis so as to stand upright from said back yoke (24a, 124a, 224a, 324a, 424a, 624a, 824a) in the direction of said rotation axis, and that are formed of a dust core made of pressed magnetic powder, and
wherein said teeth (24b, 124b, 224b, 324b, 424b, 624b, 724b, 824b) are buried to a certain depth in the direction of said rotation axis in said back yoke (24a, 124a, 224a, 324a, 424a, 624a, 824a), or said teeth (24b, 124b, 224b, 324b, 424b, 624b, 724b, 824b) are buried in said back yoke (24a, 124a, 224a, 324a, 424a, 624a, 824a) to penetrate in the direction of said rotation axis,
the method of manufacturing a motor comprising:
the step of placing said coils (23, 123, 223, 323, 423, 623, 723, 823) previously wound in a certain shape either on said back yoke (24a, 124a, 224a, 324a, 424a, 624a, 824a) or around said teeth (24b, 124b, 224b, 324b, 424b, 624b, 724b, 824b); and
the step of, after placing said coils (23, 123, 223, 323, 423, 623, 723, 823), joining said back yoke (24a, 124a, 224a, 324a, 424a, 624a, 824a) and said plurality of teeth (24b, 124b, 224b, 324b, 424b, 624b, 724b, 824b) together.

14. The method of manufacturing a motor according to claim 13, wherein
said stator (321) and said rotor (31) face each other in a plane that is generally orthogonal to said rotation axis, and
in the step of joining said back yoke (324a) and said plurality of teeth (324b) together, planes of said teeth (324b) on the sides facing said rotor (31) are referred to to join said back yoke (324a) and said plurality of teeth (324b) together.

15. A compressor **characterized in that** it installs the motor according to any one of claims 2 to 11.

16. The motor according to claim 1, wherein
portions of said plurality of teeth (1024b, 1124b, 1324b, 1424b) which are buried in said back yoke (1024a, 1124a, 1324a, 1424a) are thinner than the other portions thereof which are not buried in said back yoke (1024a, 1124a, 1324a, 1424a), and
a first insulating material (1051, 1151, 1251, 1351) for insulating said back yoke (1024a, 1124a, 1324a, 1424a) and said coils (1023, 1123, 1323, 1423) is sandwiched between said teeth (1024b, 1124b, 1324b, 1424b) and said back yoke (1024a, 1124a, 1324a, 1424a).

17. The motor according to claim 16, wherein
said back yoke (1024a, 1124a, 1324a, 1424a) includes a laminated steel sheet formed by laminating thin plates that are generally orthogonal to said rotation axis (1020, 1420) in the direction of said rotation axis.

18. The motor according to claim 16, wherein
said first insulating material (1051, 1151, 1251, 1351) is insulating film with a hole (1051a) having a shape that is larger than the cross section of the portions of said plurality of teeth (1024b, 1124b, 1324b, 1424b) which are buried in said back yoke (1024a, 1124a, 1324a, 1424a) and that is smaller than the cross section of the other portions thereof which are not buried in said back yoke (1024a, 1124a, 1324a, 1424a).

19. The motor according to claim 16, wherein
a second insulating material (1152, 1252, 1262, 1352) for insulating said teeth (1024b, 1124b, 1324b, 1424b) and coils (1023, 1123, 1323, 1423) is sandwiched between said teeth (1024b, 1124b, 1324b, 1424b) and said coils (1023, 1123, 1323, 1423), and
said second insulating material (1152, 1252, 1262, 1352) is insulating film that is wound around the periphery of the other portions of said plurality of teeth (1024b, 1124b, 1324b, 1424b) which are not buried in said back yoke (1024a, 1124a, 1324a, 1424a).

20. The motor according to claim 16, wherein
a second insulating material (1152, 1252, 1262, 1352) for insulating said teeth (1024b, 1124b, 1324b, 1424b) and said coils (1023, 1123, 1323, 1423) is sandwiched between said teeth (1024b, 1124b, 1324b, 1424b) and said coils (1023, 1123, 1323, 1423),
said first insulating material (1151, 1251, 1351) is a first resin molded material with a hole having a shape that is larger than the cross section of the portions of said plurality of teeth (1024b, 1124b, 1324b, 1424b) which are buried in said back yoke (1024a, 1124a, 1324a, 14024a) and that is smaller than the cross section of the other portions thereof which are not buried in said back yoke (1024a, 1124a, 1324a, 1424a),
said second insulating material (1152, 1252, 1262, 1352) is a second resin molded material that covers the periphery of the other portions of said plurality of teeth (1024b, 1124b, 1324b, 1424b) which are not buried in said back yoke (1024a, 1124a, 1324a, 1424a), and
said first resin molded material and said second resin molded material are integral with each other.

21. The motor according to claim 16, wherein
said plurality of teeth (1324b) of said stator core (1324) each have a wide portion (1324d) provided on the side facing said rotor (1431),
a second insulating material (1352) for insulating said teeth (1324b) and said coils (1323) is sandwiched between said teeth (1324b) and said coils (1323),
a third insulating material (1353) for insulating said coils (1323) and said wide portions (1324d) is sandwiched between said coils (1323) and said wide portions (1324d),
said second insulating material (1352) is a second resin molded material that covers the periphery of the other portions of said plurality of teeth (1324b) which are not buried in said back yoke (1324a),
said third insulating material (1353) is a third resin molded material, and
said second resin molded material and said third resin molded material are integral with each other.

22. The motor according to claim 16, wherein
said stator (1021, 1421) and said rotor (131, 1431) face each other in a plane that is generally orthogonal to said rotation axis (1020, 1420).

23. The motor according to claim 16, wherein
said rotor (1031, 1431) includes a permanent magnet (1033, 1433).

24. A method of manufacturing a motor that comprises:
a rotor (1031, 1431) rotating on a certain rotation axis (1020, 1420); and
a stator (1021, 1421) including a stator core (1024, 1124, 1324, 1424) that faces said rotor (1031, 1431) with a space therebetween, and coils (1023, 1123, 1323, 1423) that are attached to the stator core (1024, 1124, 1324, 1424),
wherein said stator core (1024, 1124, 1324, 1424) of said stator (1021, 1421) includes:
a generally disk-shaped back yoke (1024a, 1124a, 1324a, 1424a) that is generally orthogonal to said rotation axis (1020, 1420); and
a plurality of teeth (1024b, 1124b, 1324b, 1424b) that are circumferentially located in an end face of said back yoke (1024a, 1124a, 1324a, 1424a) in a direction of said rotation axis so as to stand upright from said back yoke (1024a, 1124a, 1324a, 1424a) in the direction of said rotation axis, and that are formed of a dust core made of pressed magnetic powder, and
wherein said teeth (1024b, 1324b, 1424b) are buried to a certain depth in the direction of said rotation axis in said back yoke (1024a, 1324a, 1424a), or said teeth (1124b) are buried in said back yoke (1124a) to penetrate in the direction of said rotation axis,
the method of manufacturing a motor comprising:
the step of placing, around said teeth (1024b, 1124b, 1324b, 1424b), a first insulating material (1051, 1151, 1251, 1351) for insulating said back yoke (1024a, 1124a, 1324a, 1424a) and said coils (1023, 1123, 1323, 1423) and a second insulating material (1152, 1252, 1262, 1352) for insulating said teeth (1024b, 1124b, 1324b, 1424b) and said coils (1023, 1123, 1323, 1423);
the step of winding said coils (1023, 1123, 1323, 1423) around said second insulating material (1152, 1252, 1262, 1352); and
the step of, after winding said coils (1023, 1123, 1323, 1423), joining said back yoke (1024a, 1124a, 1324a, 1424a) and said plurality of teeth (1024b, 1124b, 1324b, 1424b) together.

25. A method of manufacturing a motor that comprises:
a rotor (1031, 1431) rotating on a certain rotation axis (1020, 1420); and
a stator (1021, 1421) including a stator core (1024, 1124, 1324, 1424) that faces said rotor (1031, 1431) with a space therebetween, and coils (1023, 1123, 1323, 1423) that are attached to the stator core (1024, 1124, 1324, 1424),
wherein said stator core (1024, 1124, 1324, 1424) of said stator (1021, 1421) includes:
a generally disk-shaped back yoke (1024a, 1124a, 1324a, 1424a) that is generally orthogonal to said rotation axis (1020, 1420); and
a plurality of teeth (1024b, 1124b, 1324b, 1424b) that are circumferentially located in an end face of said back yoke (1024a, 1124a, 1324a, 1424a) in a direction of said rotation axis so as to stand upright from said back yoke (1024a, 1124a, 1324a, 1424a) in the direction of said rotation axis, and that are formed of a dust core made of pressed magnetic powder, and
wherein said teeth (1024b, 1324b, 1424b) are buried to a certain depth in the direction of said rotation axis in said back yoke (1024a, 1324a, 1424a), or said teeth (1124b) are buried in said back yoke (1124a) to penetrate in the direction of said rotation axis,
the method of manufacturing a motor comprising:
the step of winding said coils (1023, 1123, 1323, 1423) around a first insulating material (1051, 1151, 1251, 1351) for insulating said back yoke (1024a, 1124a, 1324a, 1424a) and said coils (1023, 1123, 1323, 1423) and a second insulating material (1152, 1252, 1262, 1352) for insulating said teeth (11024b, 1124b, 1324b, 1424b) and said coils (1023, 1123, 1323, 1423), said first insulating material and said second insulating material being located around a bobbin having a winding portion of generally the same shape as said teeth (1024b, 1124b, 1324b, 1424b);
the step of fitting said first insulating material (1051, 1151, 1251, 1351), said second insulating material (1152, 1252, 1262, 1352), and said coils (1023, 1123, 1323, 1423) on said teeth (1024b, 1124b, 1324b, 1424b); and
the step of joining said back yoke (1024a, 1124a, 1324a, 1424a) and said plurality of teeth (1024b, 1124b, 1324b, 1424b) together.

26. The method of manufacturing a motor according to claim 24, wherein
said stator (1021) and said rotor (1031) face each other in a plane that is generally orthogonal to said rotation axis (1020), and
in the step of joining said back yoke (1324a) and said plurality of teeth (1324b) together, planes of said teeth (1324b) on the sides facing said rotor (1031) are referred to to join said back yoke (1324a) and said plurality of teeth (1324b) together.

27. The method of manufacturing a motor according to claim 25, wherein
said stator (1021) and said rotor (1031) face each other in a plane that is generally orthogonal to said rotation axis (1020), and
in the step of joining said back yoke (1324a) and said plurality of teeth (1324b) together, planes of said teeth (1324b) on the sides facing said rotor (1031) are referred to to join said back yoke (1324a) and said plurality of teeth (1324b) together.

28. A compressor **characterized in that** it installs the motor according to any one of claims 16 to 23.

29. A method of manufacturing an armature core (2032, 2032G, 2132) that comprises:
a generally disk-shaped back yoke (2034, 2034G, 2134) having a major surface that is generally perpendicular to an axis (2018a); and
a plurality of teeth (2036, 2036G, 2136, 2136B) placed and fixed around said axis so as to protrude from one major surface of said back yoke,
the method of manufacturing an armature core comprising:
the step (a) of forming a back yoke including teeth fixing recesses (2034h, 2034Bh, 2034Ch, 2034Dh, 2134h) out of a laminated steel sheet formed by laminating thin plates along a direction of said axis; and
the step (b) of, with said back yoke fixed in a molding die (2050, 2052), molding said teeth of a dust core so that said teeth protrude into and out of said teeth fixing recesses.

30. The method of manufacturing an armature core according to claim 29, wherein said teeth fixing recesses (2034Ch, 2034Dh) each have a projection and/or depression (2034Dha) formed therein.

31. The method of manufacturing an armature core according to claim 30, wherein said projection and/or depression has an abutment surface (2034Cha, 2034Dhb) opposite to a direction of protrusion of said teeth.

32. The method of manufacturing an armature core according to claim 29, wherein
said step (a) is the step of forming divided back yokes (2135, 2135B) that are divided according to said plurality of teeth, and
said step (b) is the step of, with each of said divided back yokes fixed in a molding die, moulding said teeth (2136, 2136B) of a dust core so that said teeth protrude into and out of said teeth fixing recesses,
the method of manufacturing an armature core further comprising:
after said step (b), the step (c) of integrating each of said divided back yokes together.

33. The method of manufacturing an armature core according to claim 32, wherein said teeth have, at the ends thereof, flange portions (2136a) formed to protrude outwardly of the ends.

34. The method of manufacturing an armature core according to claim 32, further comprising:
between said step (b) and said step (c), the step of winding coils (2040) around said teeth.

35. The method of manufacturing an armature core according to claim 29, wherein teeth (2036G, 2136B) are also provided on the other major surface of said back yoke opposite to said one major surface.

36. The method of manufacturing an armature core according to claim 29, wherein angular portions of said teeth (2036, 2036G, 2136, 2136B) would therearound with coils (2040, 2040E) are rounded.

37. The method of manufacturing an armature core according to claim 36, wherein
the radii of said rounded angular portions are not less than twice the diameter of the winding coils.

38. An armature core (2032, 2032G, 2132) comprising:
a generally disk-shaped back yoke (2034, 2034G, 2134) including a major surface that is generally perpendicular to an axis (2018a); and
teeth (2036, 2036G, 2136, 2136B) placed and fixed around said axis so as to protrude from one major surface of said back yoke, wherein
said back yoke is formed of a laminated steel sheet formed by laminating thin plates along a direction of said axis and includes teeth fixing recesses (2034h, 2034Bh, 2034Ch, 2034Dh, 2134h), and
said teeth are molded of a dust core so as to be integral with said teeth fixing recesses of said back yoke.
